(19) Europäisches Patentamt
European Patent Office
Office européen des brevets

(11) **EP 3 503 379 B1**

(12) **EUROPEAN PATENT SPECIFICATION**

(45) Date of publication and mention
of the grant of the patent:
**06.10.2021 Bulletin 2021/40**

(51) Int Cl.:
*H02P 6/16* *(2016.01)*  *H02P 1/18* *(2006.01)*
*H02P 7/06* *(2006.01)*  *G01D 5/14* *(2006.01)*
*G01D 5/244* *(2006.01)*

(21) Application number: **17910507.7**

(22) Date of filing: **02.11.2017**

(86) International application number:
**PCT/JP2017/039805**

(87) International publication number:
**WO 2019/087364 (09.05.2019 Gazette 2019/19)**

(54) **CONTROL DEVICE OF DIRECT CURRENT MOTOR**

STEUERUNGSVORRICHTUNG EINES GLEICHSTROMMOTORS

DISPOSITIF DE COMMANDE DE MOTEUR À COURANT CONTINU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.06.2019 Bulletin 2019/26**

(73) Proprietor: **Igarashi Electric Works Ltd.
Kawasaki-shi, Kanagawa 212-0006 (JP)**

(72) Inventor: **TADA, Junichi
Kawasaki-shi, Kanagawa 212-0006 (JP)**

(74) Representative: **Hirsch & Associés
154 Boulevard Haussmann
75008 Paris (FR)**

(56) References cited:
**EP-A1- 1 505 371**     **EP-A1- 3 051 672**
**CN-A- 101 922 432**     **CN-A- 102 969 833**
**JP-A- 2012 213 262**     **JP-A- 2013 042 605**

**Description**

FIELD OF THE INVENTION

The present invention relates to a control device for a DC motor, and more particularly relates to a control device for a DC motor suitable for a servo control of a DC motor for driving a driven member at a target speed and a target position.

BACKGROUND OF THE INVENTION

The DC motor is widely adopted as various fields as a driving source of apparatus which constitute various kinds of control systems, such as automotive accessories, since the structure of the DC motor is relatively simple and stable performance is obtained and it is inexpensive.

In Figs. 15 and 16 of JP 2015 - 149800A, it is disclosed that as a sensor for detecting angle of a rotary shaft, three Hall elements and one GMR detector are adopted and obtains information on arbitrary specific position of the three-phase permanent magnet motor and torque fluctuation information based on signal values of the sensor.

In US2012249127A1, it is disclosed that a device comprising a sensor having a different operation principle of detecting angle of a rotary shaft of a motor, that is, a MR sensor and a Resolver with higher accuracy than the MR sensor, for example, so that redundancy against failure is high and an absolute angle can be detected with high accuracy.

In US2016161289A1, another invention is disclosed that a rotation angle detection device of a motor including a GMR sensor and an AMR sensor, and the output of the GMR sensor corrects the output of the AMR sensor for obtaining a mechanical angle $\theta$, and a backup control is executed for detecting the mechanical angle $\theta$ with only the output of the AMR sensor when the GMR sensor fails during steering.

In EP 1 505 371 A1 a position sensor with MR sensor and Hall elements is disclosed, in which the variance among the sensor elements is corrected by a signal processor, taking a measured temperature in the position sensor into consideration.

SUMMARY OF THE INVENTION

For controlling a DC motor by a closed loop as a servo motor which drives each driven member of an automobile etc., accurate information on the rotational speed, rotational phase, rotational direction, etc. of the motor is necessary.

Using the above accurate information allows safe operation of the driven member, by controlling the driven member, starting and stopping, speed control, position control, etc.

Further, for promoting automatic operation controls or automatic operation controls, more highly precise information is required, such as information on an absolute angle or an absolute origin position (absolute position: Zo) of the rotary shaft of the motor are needed.

For performing safe operation of a driven member, it is also required to improve redundancy to failure of an angle sensor which detects angle of a rotary shaft of a motor.

According to the invention described in JP 2015 - 149800A, although velocity turbulence of the motor resulting from change of a negative load torque is inhibited, but it does not disclose detection of an absolute origin position or countermeasures when the sensor fails.

According to the invention described in US2012249127A1, for acquiring the information on an absolute origin position, the structure which combined the VR resolver and the MR sensor is adapted as the different kind sensors. Since a rotor of magnetic material for the VR resolver and magnet for the MR sensors are arranged in an axial direction, therefore whole composition is complicated, the apparatus for detecting the rotation angle becomes larger, and cost is high.

According to the invention described in US2016161289A1, it does not disclose about performing servo control of a DC motor by highly accurate phase information when executing the backup control, when the GMR sensor fails.

One object of the present invention is to provide a control device for a DC motor with a brush, capable of generating highly accurate position information while utilizing an output signal of an inexpensive Hall elements as position information, for backup control when a rotation sensor including a MR sensor fails.

Other object of the present invention is to provide a control device for a DC motor capable of continuing backup control with comparatively high precision with an output signal of a Hall elements when a MR sensor fails.

The object of the present invention is achieved by the control devices as defined in the independent device claim 1 and 2 for a DC motor with brush and a brushless DC servo motor.

According to one aspect of the present invention, a control device for a DC motor comprising:

a control unit for generating and outputting a drive signal for the DC motor; and

a rotation sensor unit for detecting rotation of a rotary shaft of the DC motor, where in the control device generates drive signal of the DC motor and controls electric power supplied to an armature fixed to the rotary shaft via a brush, wherein the rotation sensor unit comprises:

a flat magnet secured to one end of the rotary shaft;
a pair of MR sensors and at least three Hall elements, which are fixed to a stator side of the DC motor at a position facing the magnet in the axial direction of the rotary shaft; and
a processing circuit unit,
wherein the rotation sensor unit generates and outputs incremental A phase and B phase signals accompanying the rotation of the rotary shaft, generates positioning information indicating a state in which the A phase and B phase output signals are in a specific relationship, based on output of the pair of MR sensors, and output information of rotation angle of the rotary shaft based on output of the Hall elements,
wherein the control unit is configured:

starting and driving the DC motor in both forward and reverse directions at a predetermined number of revolutions by an initialization drive signal;
acquiring information on the absolute origin position ($Z\alpha$) of the MR sensor with respect to the rotary shaft, from synchronization relationship between A phase signal or B phase signal output from the rotation sensor unit, the positioning information, and the initialization drive signal, wherein the output of A phase signal or B phase signal is obtained by driving the DC motor;
generating synchronization determination information based on the phase difference between the absolute origin position and the information on the rotation angle;
converting all data of the information on the A phase or the B phase, the absolute origin position, and the synchronization determination information into data on absolute signal; and
storing those data in a rewritable nonvolatile memory.

According to the present invention, it is possible to provide an inexpensive and highly reliable control device for a DC motor with a brush capable of generating highly accurate position information.

According to another aspect of the present invention, a control device for a brushless DC servo motor, comprising:

a control unit for generating and outputting a driving signal and controlling electric power supplied to each of three phase stator coils of U phase, V phase, W phase of the brushless DC servo motor; and
a rotation sensor unit for detecting rotation of a rotor having a multipolar permanent magnet,
wherein the rotation sensor unit comprises:

a flat magnet secured to one end of the rotary shaft;
a pair of MR sensors and at least three Hall elements, which are fixed to a stator side of the DC motor at a position facing the magnet in the axial direction of the rotary shaft; and
a processing circuit unit,
wherein the processing circuit unit sets a position on a boundary line between the N pole region and the S pole region of the magnet as a magnet origin position, generates signals of phase A and phase B in accordance with the rotation of the rotary shaft based on the outputs of the pair of MR sensors, outputs information on the magnet origin position, and output information of rotation angle of the rotary shaft based on output of the Hall elements,
wherein the control unit comprises:

a unit for generating each phase information of the U phase, the V phase, the W phase each of which synchronized with a rising phase of the output signal of the A phase or the B phase of the rotation sensor unit according to the number of poles of the rotor;
a unit for obtaining an absolute origin position of the rotary shaft with respect to the driving signal based on the synchronization relationship of: a driving signal rising phase at which one of the three phase stator coils rises from zero; an integrated value peak phase of counter electromotive force to the one-phase stator coil obtained by driving the motor; and a rising phase of the output signal of the A phase or the B phase from the rotation sensor unit corresponding to zero of the driving signal;
a unit for setting a plurality of Z phase signals at 360 degrees interval synchronized with the rising of the A phase or B phase output signal corresponding to zero driving signal; and
a unit for generating synchronization determination information based on the phase difference between the absolute origin position and the information on the rotation angle;

wherein the magnet is fixed at a position where the magnet origin position is synchronized with the absolute origin position of the rotary shaft, and

wherein the control device is configured to drive the motor using the rotation sensor unit as a rotary encoder of the U-phase, V-phase, and W-phase.

According to the present invention, it is possible to provide an inexpensive and highly reliable control device for a brushless DC motor capable of generating highly accurate position information.

According to another aspect of the present invention, a DC motor via a brush which electric power is supplied to amateur fixed to a rotary shaft via the brush, and rotatable in forward and reverse both directions,

wherein the DC motor comprises the rotation sensor unit and the control device according to claim 1,

determines synchronism based on the information on the rotation angle the synchronization determination information, and determines of failure of the rotation sensor unit, and

when it is determined that the MR sensor has failed, the electric power supplied to the armature is controlled based on the output of the Hall elements.

Therefore, it is possible to provide an inexpensive and highly reliable control device for a DC motor capable of generating comparatively highly precise position information.

According to another aspect of the present invention, the brushless DC servo motor comprises the rotation sensor unit and the control device according to claim 2.

determines synchronism based on the information on the rotation angle the synchronization determination information, and determines failure of the rotation sensor unit, and

when it is determined that the MR sensor has failed, the electric power supplied to the stator coil is controlled based on the output of the Hall elements.

Therefore, it is possible to provide an inexpensive and highly reliable control device for a brushless DC servo motor capable of generating comparatively highly precise position information.

According to the present invention, it is possible to provide an inexpensive and highly reliable control device for a brushless DC motor capable of generating highly accurate position information.

Further, it is possible to provide a control device for a DC motor capable of generating position information with relatively high precision as a means for determining presence or absence of a failure of a rotation sensor unit including a MR sensor by using output signals of inexpensive Hall elements.

Since the GMR sensor and the Hall elements of the rotation sensor unit can use a magnet in common, so that its configuration is simple, and it can be compact and inexpensive.

By synchronizing the high precision absolute origin position information generated using a MR sensor with the information of the rotation angle obtained by adopting inexpensive Hall elements, in spite of being high reliability, a small and inexpensive rotation sensor unit can be provided.

BRIEF DESCRIPTION OF THE DRAWINGS

Fig. 1 is a functional block diagram showing a control device for a DC motor according to the first embodiment of the present invention.

Fig.2A is a partial longitudinal sectional view of the DC motor showing relationship between the DC motor and a rotation sensor unit in Fig.1.

Fig.2B is a plan view of an example of a substrate etc. in the rotation sensor unit.

Fig.2 C is a front view of an example of a magnet of the rotation sensor unit.

Fig.2 D is a diagram showing a concept of a processing method of output signal of the MR sensor.

Fig.2E is a block diagram showing an example of a processing circuit unit of the rotation sensor unit.

Fig.2F is a diagram showing a concept of a processing method of output signal of Hall elements.

Fig.3A is a flow chart showing a processing of a controller at starting according to the first embodiment of the present invention.

Fig.3B is a flow chart showing details of an initialization processing at starting shown in Fig.3 A.

Fig.4A is a time chart for explaining a process of determining an absolute origin position and a synchronization process, based on coarse positioning information in the initialization processing.

Fig.4B is a diagram showing the output signal of the MR sensor at the time of forward rotation command.

Fig.4C is a diagram showing the output signal of the MR sensor at the time of reverse rotation command.

Fig.4D is a time chart for explaining a process of determining the absolute origin position and the synchronization process, based on a combination of coarse and dense positioning information.

Fig. 5 is a flow chart showing details of a generation processing of the signal of the absolute origin position and a synchronous processing, in a normal operation processing mode in the first embodiment.

Fig. 6 is a diagram showing relation of signals on the basis of the absolute origin position ($Z\alpha$) in Fig.5.

Fig.7A is a flow chart showing details of operation of a DC servo controller and a PWM signal generator in the first embodiment.

Fig.7B is a diagram showing an example of control of the DC motor using data of EEPROM.

Fig. 8 is a functional block diagram showing a configuration example of a control device of a brushless inner rotor type DC servo motor according to the third embodiment of the present invention.

Fig.9A is a longitudinal sectional view of the brushless DC servo motor according to the third embodiment of the present invention.

Fig.9B is a B-B cross sectional view of Fig.9A showing an example of a stator and a rotor of the brushless DC servo motor.

Fig.9C is a C-C cross sectional view of Fig.9A showing an example of a rotation sensor unit.

Fig. 10 is a diagram showing an example of a drive circuit of the brushless DC servo motor according to the third embodiment.

Fig. 11 is a time chart showing summary of an initialization processing in the third embodiment.

Fig. 12 is a flow chart showing details of an initialization processing in a processing at the time of starting in the third embodiment.

Fig. 13 is a diagram showing a relationship between integrated value peak of back electromotive forces of each phase of the motor having a rotor with eight poles of permanent magnets and positioning information (Sn), in the initialization processing of the third embodiment.

Fig. 14 is a diagram showing a relationship among signals of A phase and B phase output from a rotation sensor unit and signals Z phase, U phase, V phase, and W phase generated based on the A/B phase signals in the initialization processing of the third embodiment.

Fig. 15 is a time chart showing a process of obtaining absolute origin position ($Z_0$) of the rotary shaft with respect to a drive signal.

Fig.16A is a diagram showing a positioning method of the magnet of the rotation sensor unit.

Fig.16B is a diagram showing an example of a relation between rotating position of the magnet on the rotary shaft and output of the MR sensor (magnet origin position (T0)).

Fig. 17 is a diagram showing an example of of absolute data about signals of A phase, B phase, and Z phase of each coil of U phase, V phase, and W phase, stored in EEPROM as a result of the initialization processing.

Fig. 18 is a flow chart showing details of signal processing and synchronous processing of a controller at a normal operation mode in the third embodiment.

Fig. 19 is a flow chart showing details of operation of a DC servo controller and an inverter drive signal generator, at the normal operation mode in the third embodiment.

Fig. 20 is a functional block diagram showing an example of a control device of an outer rotor type brushless DC servo motor, according to the fifth Embodiment of the present invention.

BEST MODE FOR CARRYING OUT THE INVENTION

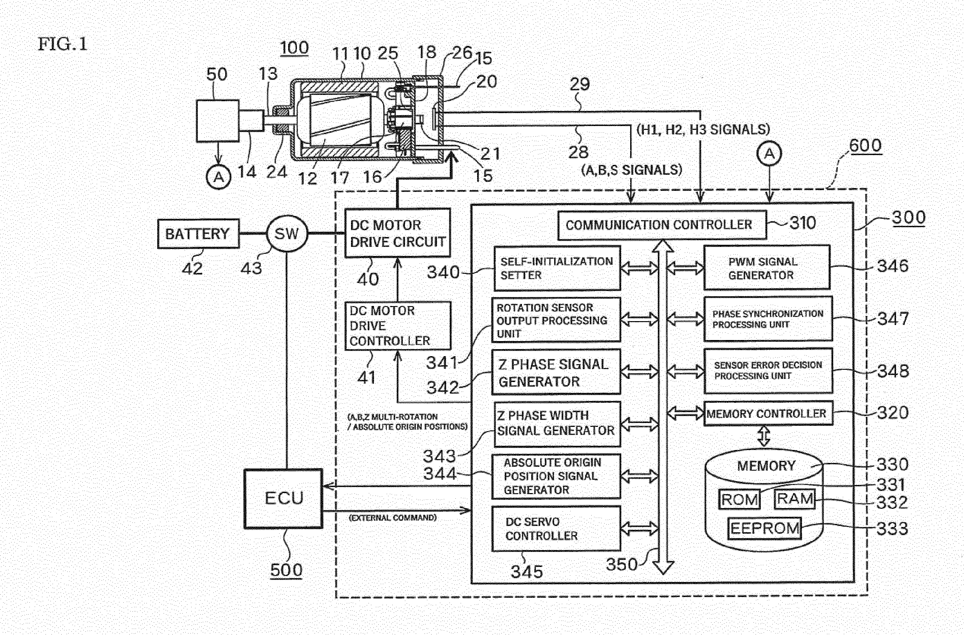

Hereinafter, an embodiment of the present invention is described in detail, referring to Fig.1 - Fig.7B.

Fig.1 is a functional block diagram of a control device for a DC motor with a brush according to the first embodiment of the present invention.

A DC motor 100 is a DC motor with a brush (hereinafter, simply a DC motor), and a permanent magnet 11 is fixed to the inside of a motor housing 10 formed in a bottomed cylindrical shape. A rotary shaft 13 integral with an amateur 12 is rotatably held by a pair of bearings 24 and 25 provided in the motor housing 10 and an end bracket (or a shield cap) 18. In view of cost reduction, as the bearings, only one end of the rotary shaft 13 is held by a ball bearing 25 and the other end is held by a plain bearing 24, for example.

A brush 16 held in a brush holder is in sliding contact with a commutator 17 fixed to the rotary shaft 13. Driving current is supplied from a battery 42 to the amateur 12 of DC motor 100 via an electric power switch 43, a DC motor drive circuit 40, a power supply terminal 15, the brush 16 and the commutator 17. The amateur 12 rotates forward or reverse in response to direction and size of the driving current supplied from the DC motor drive circuit 40.

A pinion etc. which constitute a reduction gears 14 are provided on the other end of the rotary shaft 13, and rotation of the rotary shaft 13 is slowed down by the reduction gears 14, and is transmitted to a driven member 50, for example, a wiper arm of an automobile, via a clutch or directly.

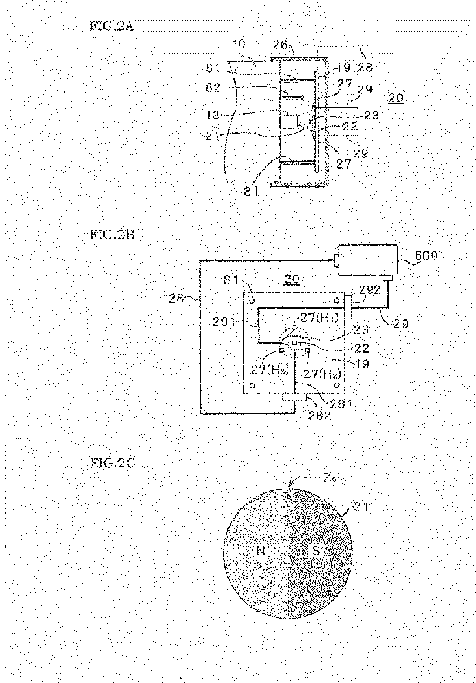

A rotation sensor unit 20 which outputs incremental signals accompanying rotation of the rotary shaft 13 is provided at one end of the rotary shaft 13 and an end cover 26 of the DC motor 100. The rotation sensor unit 20 comprises a flat plate-like magnet 21 fixed to one end face of the rotary shaft 13, a pair of MR sensors 22 (first magnetic sensor) arranged opposite to the magnet 21 in the axial direction of the rotary shaft and three Hall elements 27 (second magnetic sensor with lower resolution than the first magnetic sensor) (refer to Figs. 2A and 2B).

As the second magnetic sensor, a hole IC which process and amplifies output signals of the Hall elements and outputs pulse signals instead of the Hall elements may be used. Hereinafter, the Hall elements or the hole IC is only described as "Hall elements".

A phase signal, B phase signal and positioning signal S which are processed the output of the MR sensor of the rotation sensor unit 20 as a digital signal are transmitted to a controller 300 via a telecommunication cable 28. Analog signal (or pulse signal) of the Hall elements of the rotation sensor unit 20 is also transmitted to the controller 300 via a telecommunication cable 29.

Number of the pulses corresponding to the MR sensor output from the rotation sensor unit for every rotation of DC motor 100 is arbitrarily set up according to the resolution etc. which are needed for control. When a GMR is used as an element of the MR sensor, 36000 pulses per rotation of the rotary shaft, for example, can be obtained, and the output of 1200 pulses per rotation can be obtained by the three Hall elements, for example.

The controller 300 of the DC motor comprises functions, such as a communication controller 310, a memory controller 320, a self-initialization setter 340, a rotation sensor output processing unit 341, a Z phase signal generator 342, a Z phase width signal generator 343, an absolute origin position signal generator 344, a DC servo controller 345, a PWM signal generator 346, a phase synchronization processing unit 347, and a sensor error decision processing unit 348, etc. A single-chip microcomputer is configured by integrating a CPU, a memory, an oscillation circuit, a timer, a I/O interface, a serial I/F, etc. into one LSI, and each above-mentioned function for the controller 300 of the DC motor can be realized by executing a program stored in the memory on the CPU. In the case of the apparatus by which the driven member is mounted on an automobile, each component of the controller 300 is incorporable into an ECU 500 mounted on the automobile. In this case, the function of a DC motor drive controller 41 or a DC motor drive circuit 40 is also incorporable into the mounted ECU. The ECU 500 is provided with a controller containing an upper level processor to the controller 300, and an upper level memory.

In the memory 330, a ROM 331, a RAM 332, and at least one rewritable (an over writable) nonvolatile memory are contained and they are connected to the CPU via a bus 350. In the ROM 331, programs to be executed at power on or reset, and constants that do not change during program execution are saved. A flash memory may be adopted as a ROM. In the RAM 332, variables of the programs, command values given from outside, data of multi-rotation/absolute signal mentioned below, etc. are held.

After data of the analog signal of the Hall elements are also converted to digital signal, they are held in the RAM. A target position of the driven member 50 and a target speed (duty ratio of PWM control) etc. of the DC motor corresponded to the target position etc. are also stored in the RAM. For the rewritable (the over writable) nonvolatile memory, an EEPROM or a FRAM (Ferroelectric Random Access Memory, registered trademark) may be adopted. In the following descriptions, such a memory is only described as an EEPROM. In the EEPROM 333, A phase signal, B phase signal, multi-rotation/absolute signal, etc. are recorded and held one by one.

Generally, data of the absolute position signal, such as data of incremental A phase signal and B phase signal, positioning signal S, and phases of a Hall elements, are once held in the RAM, and then writing (storing) to the EEPROM with address is executed by an application program or a driver of the EEPROM. Reading of these data from the EEPROM to the RAM is also executed by the application program or driver using the address.

The control unit 300 of the DC motor is realized as an ASIC (Application Specific Integrated Circuit) dedicated to combining necessary functions into a single chip in the form of logic circuits, or it is realized as a chip of an IC circuit using a general-purpose single-chip microcomputer, or it is realized as a part of the function of a host computer.

Herein after, although described about the specific configuration example using the general-purpose single chip microcomputer, it cannot be overemphasized that the control device for the DC motor which has the same function mentioned above may be realized by ASIC for exclusive use.

The controller 300 is connected with the battery 42 via an electric power switch 43, and based on an external command from a host computer, for example, an in-vehicle ECU (Electric Controller) 500 etc. and input information such as digital values of A phase signal and B phase signal which are outputs of the MR sensor 22, drives the DC motor to change the operation mode of the driven member 50, for example, a wiper arm.

That is, in the controller 300 of the DC motor, based on the A phase signal and B phase signal, etc., an absolute origin position signal and Z phase signal are generated, and further, multi-rotation/absolute signal is generated. A part of information on the controller 300 is transmitted also to the ECU 500.

The control unit 300 calculates the rotational position of the DC motor for driving a wiper arm, consequently, the rotational position of the wiper arm, based on the command value stored in the memory 330 and various signals from the rotation sensor unit 20, and generates information of the PWM signal for controlling the driving of the DC motor, in such a manner that the wiper arm reciprocates and rotates the inverted position upper and lower the wiping surface. The information on the PWM signal for the DC motor drive based on these signals is output to the DC motor drive controller 41 via a serial communication line from the controller 300 of the DC motor. It goes without saying that signals other than the PWM signal may be used as a driving signal for driving the DC motor.

The driven member 50 may be an object of the open loop control or may be an object of closed loop control by the controller 300. In the case of closed loop control, a rotating position or movement magnitude, etc. of the driven member 50 are detected by the sensor, the information (A) is fed back to the controller 300, and servo control of the DC motor is performed with the controller 300.

The controller 300 of the DC motor can be mounted on a printed circuit board 600 of one sheet with the DC motor drive controller 41 and the DC motor drive circuit 40, for example, and it can be fixed to the position which is an inner side surface of the end bracket (or shield cap) 18, and near the rotation sensor unit 20. In this case, the DC motor drive circuit 40 is connected to the source line between the power supply terminal 15 and the brush 16. Depending on the environment where the DC motor is installed, the printed circuit board 600 may be installed in the outside of the DC motor. When a noise prevention circuit of EMC standard correspondence is installed in a brush holder etc., it is desirable to connect a printed circuit board of the rotation sensor unit and the printed circuit board 600 to the battery at the battery side. Source lines for the rotation sensor unit 20 and the printed circuit board 600 etc. are omitted on Drawings.

Each function realized by executing the program shown in the functional block form in FIG. 1, such as the communication controller 310, the memory controller 320, the self-initialization setter 340, the rotation sensor output processing unit 341, Z phase signal generator 342, the Z phase width signal generator 343, the absolute origin position signal generator 344, the DC servo controller 345, the PWM signal generator 346, the phase synchronization processing unit 347, and the sensor error decision processing unit 348 are displayed as an example.

Division of plurality of functions is arbitrary and any of the plurality of functions may be realized by a common program, or a specific function may be realized by a plurality of different programs and IC circuits.

Next, about the relation of the DC motor 100 and the rotation sensor unit 20 in Fig.1 is described referring to Figs. 2A - 2C.

Fig.2A is a partial longitudinal sectional view of the DC motor, and Fig.2B is a figure showing configuration examples in the rotation sensor unit, such as a substrate.

The pair of MR sensors 22 (22A, 22B), the Hall elements 27, and the processing circuit unit 23 are mounted on the printed circuit board 19 and are fixed to the end bracket 18 with a support pin 81. Reference numeral 82 is a pin for positioning the Hall elements 27. The processing circuit unit 23 is connected to the telecommunication cable 28 via a wiring 281 and the connector 82, and Hall elements 27 are connected to the telecommunication cable 29 via a wiring 291 and a connector 292.

In Fig.2A, for clarity, the magnet 21, the MR sensor 22, and the IC chip included processing circuit unit 23 are displayed largely. As actual size, when an example is given, the magnet is 10 mm in diameter. The size of the printed circuit board is 35 mm x 35 mm, and in the IC chip (5 mm x 6 mm) mounted on the printed circuit board, the GMR sensor 22 of the diaphragm structure of the size not more than 1 mm x 1 mm and the processing circuit unit 23 which comprises a microcomputer and a program are integrally formed by the semiconductor manufacturing process. On the outer circumference of the IC chip, three Hall elements 27 are arranged at equal intervals.

The MR sensor 22 is an essential part of the angle detection sensor, that is, the control unit 300. Assuming the sensor is mounted on the automobile etc. and is used for a long time under a severe environment, the backup control function by the output signal of the Hall elements 27 is provided in preparation for a case where a sensor of thin film structure is damaged in its function.

An example of the magnet 21 in the rotation sensor unit 20 is shown in Fig.2C. The absolute origin position ($Z_0$) of the magnet is the position of one end on a boundary line between the N pole region and the S pole region of the planar magnet 21 magnetized with one N pole and one S pole.

This absolute origin position ($Z_0$) is also a specific position in the circumferential direction on the rotary shaft synchronized with zero of driving signal of the motor, for example, a specific position on the circumferential direction on the rotary shaft corresponding to the rising point of the A-phase pulse signal synchronized with the zero of drive signal.

As the pair of MR sensors 22, GMR, TMR, AMR, etc. can be used, for example.

The magnet 21 is composed of a substrate made of Si or glass and a thin film of an alloy containing a ferromagnetic metal as a main component such as Ni, Fe formed on the substrate. The pair of MR sensors 22 are provided for detecting change in resistance of the magnetic field due to the switching of the magnetic poles of N pole and S pole.

The pair of magnetoresistance effect elements constituting the MR sensor 22 are arranged with a predetermined interval in the rotation direction of the rotary shaft 13, so that phases of output pulse signals of the MR sensor are shifted from each other by 90 degrees. A pair of magnetoresistance effect elements are connected in series, voltage Vcc is applied across the pair of elements, and a voltage signal representing the potential at connection points between the pair of elements is the output of the MR sensor 22.

Since a transverse magnetic field peculiar to the MR sensor is used, the magnet 21 is not multipolar magnetized but magnetized with one N pole and one S pole.

If the plain bearing 24 is adopted as one bearing of the DC motor, along with switching of forward rotation and reverse rotation of the DC motor, there is a possibility of moving the rotary shaft 13 to an axial direction about 0.2 mm at the maximum, for example. When a Hall element which uses a longitudinal magnetic field is adopted as a sensor, if there is such a movement of the rotary shaft accompanying switching between forward rotation and reverse rotation, although there is no change in the phase of the sensor output, it has big influence on amplitude of the output.

According to the present invention, the MR sensor which faces the one end face of the rotary shaft 13 is disposed, and the transverse magnetic field peculiar to the MR sensor is used. Therefore, even if the rotary shaft 13 on which the magnet 21 is fixed moves to the axial direction slightly, the output of MR sensor 22 will not be affected.

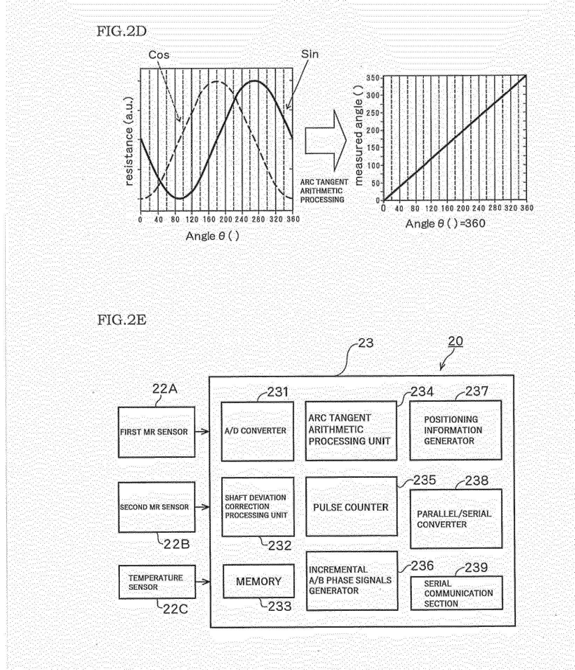

Next, a concept of a processing method of output signal of the MR sensor is described with reference to Figs. 2D and 2E.

The MR sensor 22 is provided such that have a different characteristic of changing an electric resistance value with respect to the direction of the applied magnetic field. For this reason, as the magnet 21 rotates by the angle $\theta$, as the direction of the magnetic field acting on each MR sensor rotates, and corresponding to the rotation, the electric resistance value of the MR sensor varies, in other words, the voltage of the output signal of the MR sensor 22 varies. Corresponding to one rotation of the rotary shaft 13, pulse signals of 360 degrees each for one cycle are outputted for each of a SIN wave and a COS wave.

Fig.2E is a block diagram showing an example of the processing circuit unit 23.

The processing circuit unit 23 has each function of a A/D converter 231, a shaft deviation correction processing unit 232, a memories 233 such as a RAM, an arc tangent arithmetic processing unit 234, a pulse counter 235, an incremental A phase and a B phase signal generator 236, a positioning information generator 237, a parallel/serial converter 238, and a serial communication section 239. The processing circuit unit 23 is realized by running a program on a microcomputer with a memory, for example.

In the processing circuit unit 23, the analog signals of the pair of MR sensors 22 are converted into a digital signal of phase A and phase B which are quantized and multi-divided by electrical angle interpolation processing, the digital signal is accumulated by the pulse counter 235, then this accumulation value is transmitted to the control unit 300 of the DC motor via the communication cable 28 as the data of pulses of incremental phase A and phase B signals, then this pulse data are stored in the memory 330 via the rotation sensor output processing unit 341.

Namely, in the processing circuit unit 23, the output of the analog signal of pair of MR sensors 22A and 22B are converted to a digital signal by A/D converter 231, processed an arc tangent operation by the arc tangent arithmetic processing unit 234, accumulated with the pulse counter 235, and the accumulated value is generated as incremental A phase signal and B phase signal (hereinafter, A/B phase signals) by the incremental A phase/B phase signal generating section 236, and are held in the memory 233.

The positioning information generator 237 generates information corresponding to a specific angle $\theta$ result of the arctangent calculation as shown in the right diagram of Fig. 2D, as "positioning information (Sn)" for determining the position of the absolute origin position of the MR sensor and store the information in the memory 233.

For example, a point corresponding to the rotation angle 0 of the rotary shaft, where both angles of the horizontal axis and the horizontal axis are 0 degree as shown in the right side of Fig. 2D, is set as positioning information (Sn). In other words, the positioning information (Sn) corresponds to the rising point at 0 degree of the A phase signal, where is the 0 - 0 point of the SIN, COS waveform. In this case, the positioning information (Sn) is generated only one for every rotation of the rotary shaft 13.

As the angle of rotation $\theta$ which generates the positioning information (Sn), any value can be used. That is, the positioning information (Sn) is generated at a position where the value of the SIN waveform and the value of the COS waveform are in a preset specific relationship.

The plurality of positioning information (Sn) may be generated for each rotation of the rotary shaft 13, in other words, the positioning information may be generated for each of a plurality of positions in which the value of the SIN waveform and the value of the COS waveform are in a preset specific relationship. Or, different kinds of signals having different resolutions may be combined., for example, rough signals of about 1 to 2 times per rotation and tight signals of several tens of times per rotation. Or, a different kind of signal may be generated combining the A phase signal and the B phase signal.

In the present invention, such a position where the values of the A/B phase signals have a preset specific size relationship, in other words, a position where the value of the SIN waveform and the value of the COS waveform have a preset specific size relationship, is defined as "a position indicating a state in which the output A/B phase signals are in a specific relationship".

There is a possibility that the information includes errors (mainly axial misalignment) due to manufacturing error, installation error, temperature influence, etc. of each sensor etc. That is, the A phase and the B phase signal acquired by the arctangent operation should be placed on a straight line essentially in proportion to the rotation angle $\theta$

of the rotary shaft 13.

However, due to errors such as misalignment, there may be cases where repeated distortion is included every 360 degrees or every 90 degrees of phase difference of the pair of MR sensors. In the shaft deviation correction processing unit 232, the center of rotation of the pair of MR sensors is extracted on the basis of data of at least one revolution of the rotary shaft 13, and the presence or absence of distortion such as signals of phase A and phase B with respect to the rotation angle θ is detected, and when there is a distortion, those compensation processes are performed.

The A/B phase signals generated by parallel transmission processing and the positioning information (Sn) are converted to send data for serial transmissions (BUS signal) which suited the standard of serial transmission communication in the Parallel/serial converter 238, and this BUS signal is transmitted to the controller 300 of the DC motor via the one transmission line 28 from the serial communication section 239.

As the pulse counter 235 of the rotation sensor unit, an up-down counter may be adopted, and may generates the A/B phase signals in which information on the direction of rotation of the rotary shaft 13 in the forward and reverse directions is also added to the accumulation value of the pulse and transmits to the control unit 300 of the DC motor together with the positioning information (Sn). In the present invention, count information with the information of direction of rotation by such an up-down counter shall also be treated as the accumulation value.

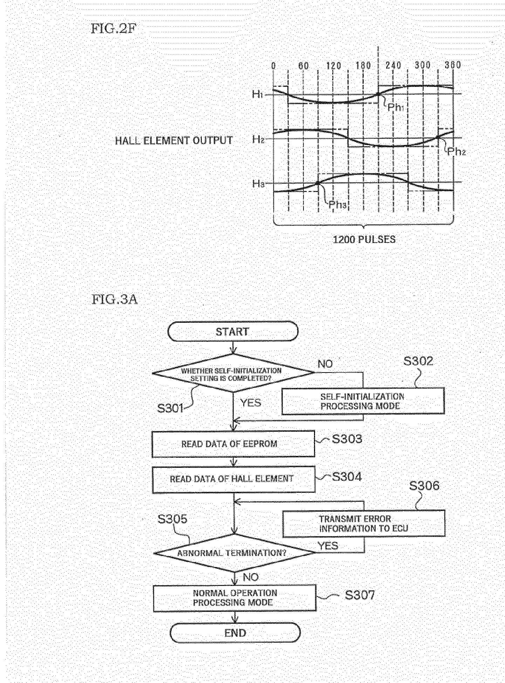

Next, Fig.2F is a diagram showing an example of analog output signals of three Hall elements H 1, H 2, and H 3 arranged at 120° intervals, and an example of digital waveforms processed by the rotation sensor output processing unit 341 using an AD converter, a comparator, etc.

The amplitude Ha of an analog output signal of the Hall elements is a Sin wave and is expressed like the following formula.

$$Ha = K \times Sin\ θ$$

Here, K is a constant.

Therefore, if the arc Sin of Ha/K is taken, the angle of rotation θ (mechanical angle) of a rotor (a rotary shaft) can be obtained. Although it is possible to obtain the angle θ even with one Hall elements, in practice, three or more Hall elements are adopted so that a high precision rotation angle θ can be obtained even if there are fluctuations due to position error, device characteristic variation, ambient temperature, etc.

$P_{h1}$ indicates the installation position (reference position) of the Hall elements H1, $P_{h2}$ indicates the installation position (reference position) of the Hall elements H2, and $P_{h3}$ indicates the installation position (reference position) of the Hall elements H3.

These reference positions correspond to the installed position of each Hall elements, and the phase of those angles of rotation is not subject to the influence of temperature etc. and is in a fixed position, respectively. In the present invention, at least one reference position of the rotation angle, hereafter referred to as a reference position $P_{h1Z}$ of the Hall elements H1, is used to determine the presence or absence of synchronization.

For the sake of clarity, the digital waveform of the Hall elements output in Fig.2F shows an example of rising or falling at intervals of 60 degrees of one rotation 360 degrees. In the rotation sensor output processing unit 341, this digital waveform is further interpolated by time division etc., thereby generating information on the rotational angle, for example, 1200 pulses per revolution using three Hall elements or an incremental consisting of 3600 pulses digital signal using 6 Hall elements. For eliminating the influence of temperature on the output of the Hall elements and to make it higher accuracy, a function for temperature compensating processing may be added. The rotation sensor output processing unit 341 gives an address to the information on the rotational angle and records it in the memory 330 as information on angle of rotation by the Hall elements.

Next, Fig.3A is a flow chart showing a processing at the time of starting of the controller in the first embodiment of the present invention.

First, the self-initialization setter 340 of the controller 300 of the DC motor checks whether not the initial setting by the self-initialization (initial setting) processing has completed, immediately after power supply starting (S301). In the case of no, it shifts to the self-initialization process mode (S302).

When the initialization processing has finished, next, it moves to abnormal termination judgment mode. In this mode, the data of the multi rotation absolute signals is read from the EEPROM via RAM (S303), and the data of the information on angle of rotation of the Hall elements is read (S304), and based on these data, it is judged whether the end of the previous operation has been normally performed or has ended in the abnormal state (S305). That is, if the termination of the previous operation of the DC motor is normal, the data of the EEPROM is stored at the position of absolute value 0 of the rotary shaft at the start of the DC motor, that is, the absolute 0 position Zα of the rotary shaft 13 described later in detail.

On the other hand, if the data in the EEPROM is apart from the absolute value 0, it is determined that it is abnormal termination. In the case of abnormal termination, error information is transmitted to upper level ECU (S306), and the restoration processing and the processing of emergency mode operation towards operation resumption of the driven member 50 are made from the ECU side.

At the time of emergency mode operation based on failure of the MR sensor, the sensor error decision processing unit 348 performs a backup control function using the information on the absolute position signal by the Hall elements, operates the DC servo controller 345 and the PWM signal generator 346, and controls rotation of the DC motor.

If normal, the controller 300 of the DC motor will shift to the normal operation processing mode (S307).

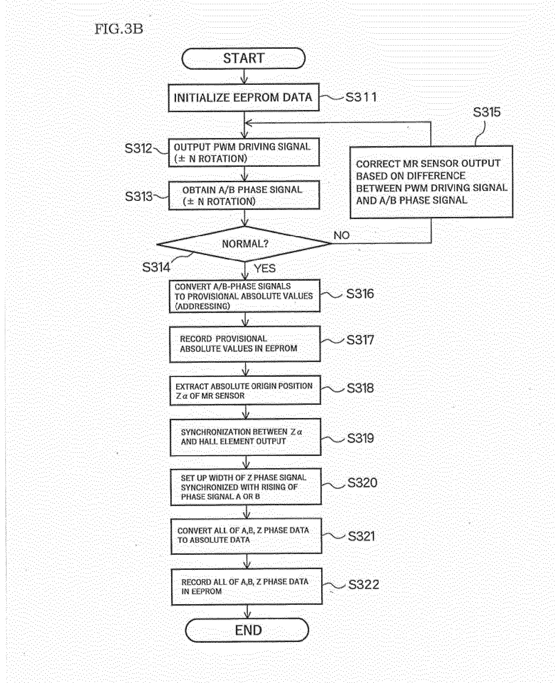

The details of the self-initialization processing mode(S302) of the controller 300 in the processing at the time of starting are shown in Fig.3B. In the self-initialization process, the EEPROM data is initialized (S311), initialization driving signal for initial setting, for example, a PWM signal, ($\pm$N rotation) is generated, and it is output to the DC servo controller 345 (S312), a driving signal is generated by the PWM signal generator 346, and the DC motor is driven with the PWM signal.

Acquiring of the A/B phase signals (S313) immediately after power supply starting is performed by making forward and reverse both directions rotate of the DC motor based on the PWM signal and carrying out relative motion of the magnet 21 on the rotary shaft 13 to MR sensor 22.

The initialization driving signal is replaced with the DC servo control signal of the DC motor. Even if the DC motor is originally controlled to be closed loop, on the initialization processing, first, the DC motor is driven in the state of an open control DC motor with an initialization driving signal.

When the DC motor 100 is driven in normal rotation and inversion both directions with the PWM signal as the motor driving signal, the A/B phase signals and the positioning information (Sn) which are corresponded to the command value (motor driving signal) are acquired from the rotation sensor unit 20.

Next, whether the response state of the DC motor and the MR sensor are in normal state or no is judged (S314). That is, the A/B phase signals which have acquired are compared with the command value of initialization processing, and it is judged whether the accumulation value is normal, i.e., it is judged whether the accumulation value of the A/B phase signals corresponds to the command value of the PWM signal and whether the response state is normal or not.

When it is determined that there is an abnormality in the correspondence relationship, an output correction process, such as correction of the temperature characteristic of the MR sensor etc., is separately performed so that the command value corresponds to the accumulation of the A/B phase signals (S315).

When it does not become normal state even if it carries out multiple-times enforcement of the processing (S315) of output correction, since another causes, like the EEPROM itself has abnormalities are also considered, then an error indication is displayed informing of the problem.

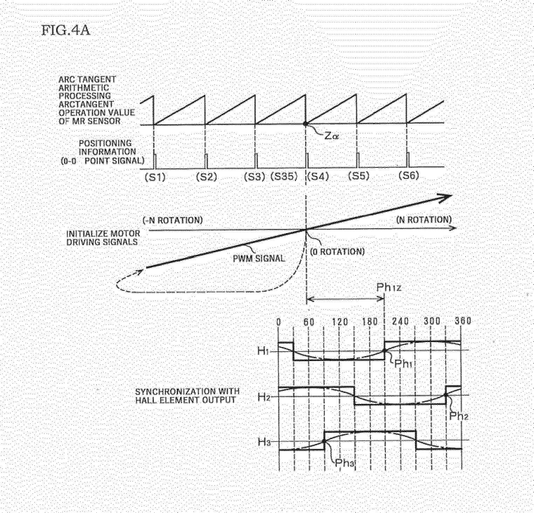

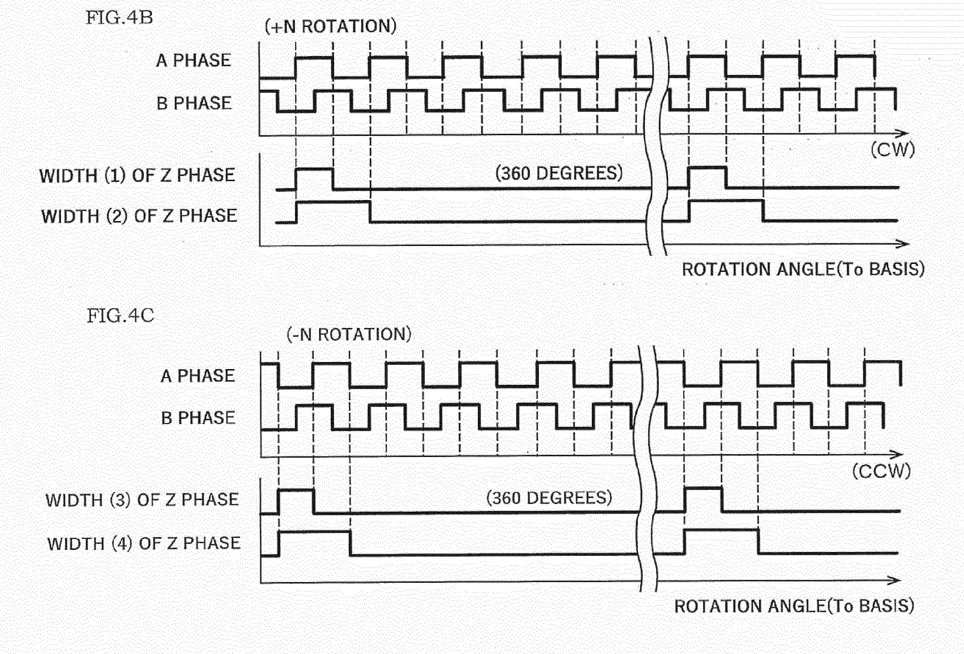

Fig. 4A shows the relation between the PWM signal and the output of the MR sensor at the time of the self-initialization process, and the concept of synchronous processing. Fig. 4B is a diagram showing the output signals (A phase, B phase) of the MR sensor at the time of the forward rotation command as the PWM signal, and Fig. 4C is a diagram showing output signals the MR sensor at the time of the reverse rotation command as the PWM signal. The direction of a phase shift is reversed according to the direction of rotation of the rotary shaft 13.

Here, positioning information (Sn) is generated at 0-0 point of SIN and COS waveforms, corresponding to the rising time point corresponding to 0 degree of A phase signal, at the time of the forward rotation command. In this case, in the DC motor, the rotary shaft needs to pass through the origin position in the state of forward rotation.

Therefore, as shown in the middle stage of Fig. 4A, the DC motor is started, and forward rotation from -2.5 rotation to +3.5 rotation is carried out with the initialization driving signal (PWM signal). So that, as shown in the top of Fig. 4A, when the DC motor passes each rotation of -2, -1, 0, +1, +2, and +3 on forward rotation, the result of the Arc tangent arithmetic processing will be 0 - 0 point respectively. That is, at each of the above points, a rising of the digital value corresponding to 0 degree of the A phase signal is obtained. Thus, positioning information (S1) to (S6) corresponding to each point in time is output.

Returns to Fig.3B, when it is judged that the MR sensor being normal, or when a compensation process has executed, next, the self-initialization process performs absolution of the information obtained from the rotation sensor unit 20 (S316). That is, for recording in the EEPROM, address for writing is assigned (addressing) to each data of the A/B phase signals. Thus, for absolution, the address of EEPROM with which it corresponds to the accumulation value is given to each signal of the A phase and B phase which is an output value of the time series of the rotation sensor unit, and it is considered as an absolute signal.

Also, the point of the positioning information (S4) synchronized with the 0 value of the motor drive signal is set as the provisional origin position (Z$\beta$). Since the provisional origin position (Z$\beta$) is only based on the output of the MR sensor, it is not clear whether it is corresponding correctly with the position of the absolute starting point (absolute position Zo) of the MR sensor. This absolute signal can be said to be a provisional absolute signal suitable for giving angle information of a certain degree of accuracy to the rotary shaft 13.

The data of the provisional absolute signal matched with this provisional origin position (Z$\beta$) is recorded in the EEPROM via RAM (S317). By assigning an address to the data of the accumulation value of these A/B phase signals and the data of the provisional absolute signal and recording them in the EEPROM, it is possible to create a table of simple absolute values, for example, as shown in Table 1.

[Table 1]

| EEPROM ADDRESS | POSITIONING INFORMATION (Sn) | (PROVISIONAL ORIGIN POSITION) | ROTATION SPEEDS (Z PHASE) | A PHASE/ B PHASE | ABSOLUTE (CUMULATIVE ADDITION VALUE) | DIRECTION OF ROTATION |
|---|---|---|---|---|---|---|
| 0000520 | S4 | $Z_\beta$ | 0 | A | 0000019 | + |
| 0000521 | | | 0 | B | 0000019 | + |
| 0000522 | | | 0 | A | 0000020 | + |
| 0000523 | | | 0 | B | 0000020 | + |
| ⋮ | ⋮ | ⋮ | ⋮ | ⋮ | ⋮ | ⋮ |

Next, the process moves to an extraction mode of an absolute origin position (S318) which extracts absolute origin position $Z\alpha$ where corresponds to the absolute origin position (Absolute) of the MR sensor 22 with respect to the rotary shaft 13. The absolute origin position (Zo) of the MR sensor indicates a position where the output of the MR sensor 22A becomes zero with respect to a specific position of the magnet 21 on the rotary shaft 13. According to this embodiment, instead of carrying out directly detecting the absolute origin position (Zo), indirectly, the absolute origin position $Z\alpha$ which corresponds to this absolute origin position is extracted.

In the absolute origin position extraction mode (S 318), based on the above definition, as shown in Fig. 4A, the position of the positioning information (S4) in which the ON duty of the PWM signal synchronizes with zero among the positioning information (S1) - (S6) obtained from the result of the arctangent calculation of the A/B phase signals of the MR sensor, is set as the absolute origin position ($Z\alpha$) of the MR sensor synchronized with the rising point of the A phase pulse, in the illustrated example. Thus, the absolute origin position of quite high accuracy can be determined to the absolute position (Absolute).

Higher-precision absolute origin position $Z\alpha$ can be determined by using time information of the transmission timing of the command value (PWM signal) of the initialization drive signal and the reception timing of the A phase, the B phase signal and the positioning information.

Thus, the highly precise data of "absolute origin position ($Z\alpha$) of a MR sensor " is obtained based on high-resolution A/B phase signals and positioning information each of which is corresponds to the initialization driving signal.

Next, synchronization processing necessary for synchronizing the phase between the absolute origin position $Z\alpha$ and the output of the Hall elements (information on the rotation angle) is performed (S319). Namely, in the phase synchronization processing section 347, based on the data recorded in the memory 330, as shown at the bottom of Fig. 4A, $\Delta\theta_0$ which is the difference between the absolute origin position $Z\alpha$ of the rotary shaft 13 and the phase difference (mechanical angle) between the reference position $P_{h1Z}$ of the Hall elements H1 is calculated, and digital value corresponding to the $\Delta\theta_0$ is recorded in the memory 330 as synchronization information for determination in the synchronization determination processing.

There is a big difference in the resolution of the GMR and the Hall elements. However, the first rising point of the phase of the reference position $P_{h1Z}$ of the Hall elements H1 (or H2, H3) is hardly affected by temperature, etc. and is in a substantially fixed position. Then, by synchronizing the first rising point of the pulse corresponding to the reference position $P_{h1Z}$ with the absolute origin position $Z\alpha$ of the rotary shaft 13, while utilizing the output of the Hall elements with poor resolution, it is possible to obtain synchronization information and phase information with relatively high accuracy.

In the rotation sensor output processing unit 341, the information on this angle of rotation and reference position $P_{h1Z}$ of the Hall elements H1 for every rotation are associated, and the information on angle of rotation by the Hall elements is recorded in the memory 330 as an absolute position signal of one rotation or multi rotation.

The absolute origin position $Z\alpha$ of the rotary shaft 13 and the first rising point of each phase of the reference positions $P_{h1Z}$ to $P_{h3Z}$ of the three Hall elements are associated with each other, the accuracy of the absolute position signal based on the Hall elements output may be increased. The absolute position signal based on the Hall elements output is used at the time of operation based on the backup control function.

Next, the Z phase signal generator 342 sets up the width of Z phase signal and Z phase (S320). First, Z phase signal is set up. Here, the Z phase signal is set up to the incremental A/B phase signals based on the absolute origin position $Z\alpha$ acquired at the previous step. That is, Z phase signal (Z 0, Z 1, Z 2, -, -, Zn) synchronized with each rising point of A phase digital output at 360 degrees interval is set for the accumulated value of the A/B phase signals. For example, Z0 expresses that the rotary shaft 13 is less than one revolution and Z1 expresses that the rotary shaft 13 is one or more but less than two rotations. Z phase signal may be synchronized with each rising point of the B phase digital output.

The accumulated value of the A/B phase signals from which the Z phase signal is obtained is converted into the accumulated value for each revolution of the rotation shaft 13 (every 360 degrees), and address of the EEPROM is added to the combination of the accumulated value and the Z phase signal, and it becomes data of a multi rotation absolute signal. The data of this multi rotation absolute signal is recorded in the EEPROM by a table format. This table can be used as control information on the DC motor.

Next, the width of the Z phase starting from the absolute origin position $Z\alpha$ is determined.

First, as shown in Fig.4B, a signal of "Z phase width (1)" in synchronization with the rising point of the first A signal of each Z phase signal (Z0, Z1, Z2, -, -, Zn) and having a width of 1/2 cycle of the A signal is determined. Further, a signal of "Z phase width (2)" in synchronization with the rising point of the A signal and having a width of 1 cycle of the A signal is determined. The signals of "Z phase width (1)" and "Z phase width (2)" are signals repeated at intervals of 360 degrees respectively.

Similarly, as shown in Fig.4C, a signal of "Z phase width (3)" in synchronization with the rising point of the B signal of each of Z phase signals (Z0, Z1, Z2, --, Zn) and having a width of 1/2 cycle of the B signal is determined. Further, a signal of "Z phase width (4)" in synchronization with the rising point of the B signal and having a width of 1 cycle of the B signal is determined. The "Z phase width (3)"and the "Z phase width (4)" are signals repeated at intervals of 360 degrees respectively. The period of "Z phase width" and the number of "Z phase width" can be arbitrarily set.

The address of the EEPROM are given to these A/B phase signals and Z phase data, and these data are recorded in the EEPROM.

Next, all of A/B phase signals obtained from the rotation sensor unit are associated with the absolute origin position $Z\alpha$, the Z phase signal, and "the width of the Z phase", and addresses of the EEPROM are given, as a result, all of the signals are converted into a multi rotation absolute position signal representing the absolute origin position of the rotary shaft 13 (S321).

Then, as a result of the self-initialization process, all data of signals at the time of startup, for example, the data of the A phase, the B phase, the absolute origin position ($Z\alpha$), the position of the Z phase, and the width of each Z phase, as shown in Table 2, are recorded in the EEPROM via the RAM (S322). Phase difference information (mechanical angle) $\Delta\theta_0$ for a judgment is also recorded in the EEPROM.

[Table 2]

| EEPROM ADDRESS | ROTATION SPEEDS (Z PHASE) | RELATIVE ORIGIN / Z PHASE WIDTH | A PHASE/ B PHASE | PHASE WIDTH (ANGLE · PERIOD) | STARTING POINT CUMULATIVE ADDITION VALUE |
|---|---|---|---|---|---|
| 0100505 | | $Z\alpha$ | A | 0 | 0000004 |
| 0100506 | | | A | | 0000004 |
| 0100507 | | | A | | 0000004 |
| 0100508 | | | B | | 0003004 |
| 0100509 | | | B | | 0003004 |

Each data of the table 2 can be used as a table which gives the absolute information etc. on the position or on the angle of the rotary shaft. Also, each of "Z phase width (1) " to "Z phase width (4) " can be used to generate various control signals of the DC motor, such as a PWM signal.

Depending on the application, some DC motors with brushes for automobiles are driven only within one to two revolutions in both forward and reverse directions. In such a DC motor having a narrow rotation range, it is required to accurately determine the absolute origin position $Z\alpha$ in a narrower angular range during the self-initialization process. To meet such a requirement, the origin position can also be determined based on the combination of dense or rough and dense positioning information.

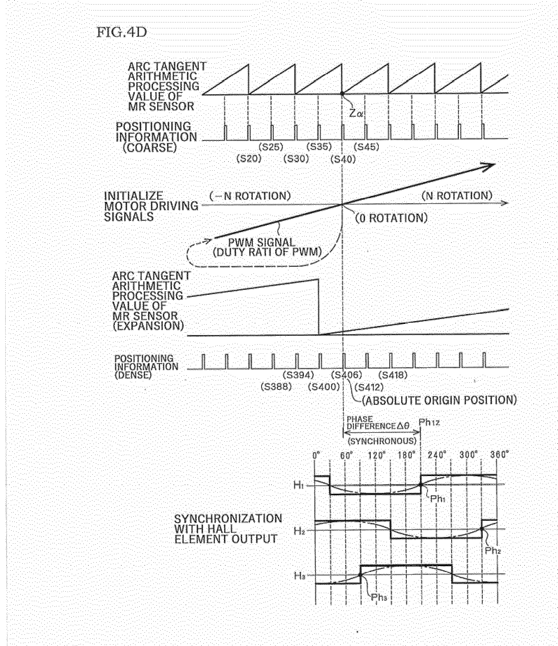

Fig. 4D is a time chart for explaining the process of determining the absolute origin position and the synchronization process during the self-initialization process, based on the combination of the coarse positioning information and the dense positioning information. In the example of Fig.4D, as the positioning information output from the positioning information generator 237 of the rotation sensor unit, a coarse positioning information provided every 180 degrees of the rotary shaft rotation and a dense positioning information provided every 6 degrees of the rotary shaft rotation are outputted as positioning information.

First, among the coarse positioning information (-, S20, -, S45, -,), the position where the on-duty of the PWM signal is synchronized with zero, in this example, the position of the positioning information (S40), is temporarily set to the absolute origin position ($Z\alpha$) of the MR sensor in synchronization with the rising point of the A phase pulse.

Next, for the vicinity of the provisionally determined position (S40), dense positioning information (-, S388, -, -, S418, -,) is adopted, and in the vicinity thereof, the position at which the ON duty of the PWM signal synchronizes with zero, the position of the positioning information (S406) in this example, is formally determined to the absolute origin position ($Z\alpha$) of the MR sensor.

Thus, the absolute origin position of quite high accuracy which may include an error of about $\pm$ 6 degrees can be determined to the absolute origin position (Absolute).

As shown at the bottom of Fig. 4D, a phase difference (mechanical angle) $\Delta\theta0$ between the position of the positioning information (S406) and the reference position of the Hall elements is calculated, and digital value corresponding to the phase difference is recorded in the memory 330 as information for executing the synchronization determination processing and the backup control function.

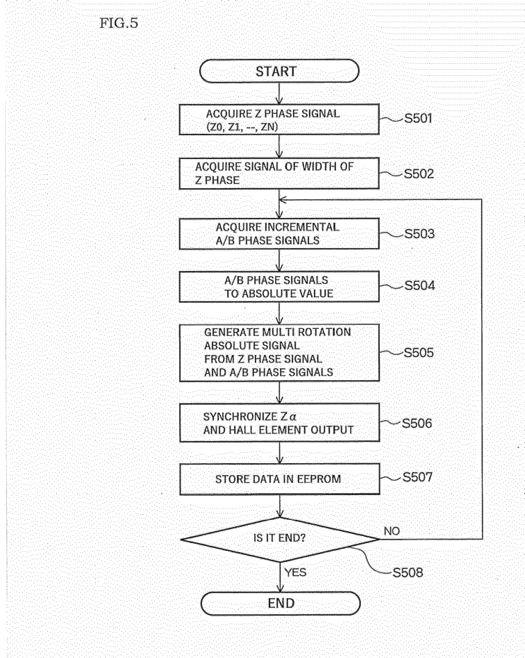

Fig.5 is a flow chart showing details of the generation processing of signal of an absolute origin position, and synchronous processing, in the normal operation processing mode.

In the normal operation processing mode, the controller 300 of the DC motor acquires absolute starting point $Z\alpha$ and Z phase signal (Z0, Z1, Z2, --, Zn) as shown in Table 2 via EEPROM to RAM of the memory (S501), and also acquires the signal of the width of Z phase (S502). The A/B phase signals from the rotation sensor unit are acquired via RAM (S503), the address of EEPROM is given to the incremental accumulation value so that absolution of the A/B phase signals for every rotation of the rotary shaft is executed, and the data are recorded in the RAM (S504).

Further, from the A/B phase signals and Z phase signal, the multi rotation absolute signals including information on the rotation speed and on the angle of rotation of the DC motor is generated, then, a table which corresponds to the Table 2 is generated, and they are records in the RAM (S505).

Next, the phase synchronization processing unit 347 performs synchronizations between the absolute origin position ($Z\alpha$) and the Hall elements output (angle of rotation) (S506). That is, information on mutual phases relation for synchronization $\Delta\theta_0$ for synchronizing the absolute origin position ($Z\alpha$) of the MR sensor with the reference position $P_{h1Z}$ of the Hall elements H1 or (Alternatively, $P_{h2Z}$ or $P_{h3Z}$ of Hall elements H2, H3) is acquired, and the information is recorded in the memory.

These pieces of information generated with the controller 300 is recorded in the EEPROM 333, for example as a table as shown in Table 2 via RAM 332 one by one (S507). Those process are repeatedly performed until the normal operation processing mode is completed (S508), and it ends with the end of the operation.

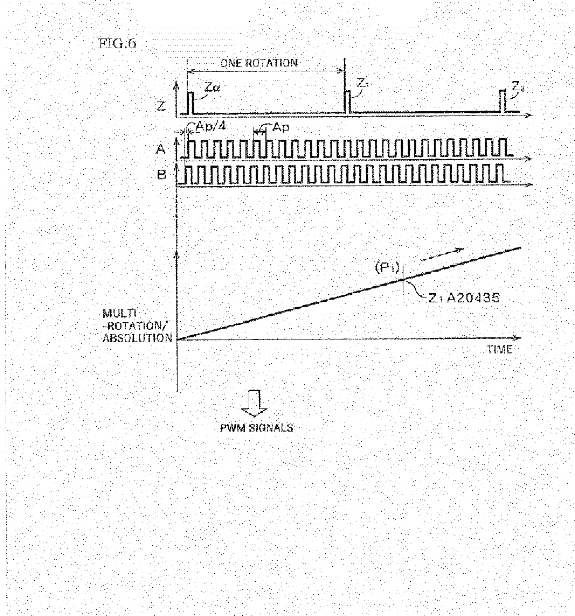

Fig. 6 is a diagram Illustrating the relationship of signals basis of the absolute origin position ($Z\alpha$). Especially, this figure shows an example of the relationship of the A/B phase signals, and the Z position signal (Z0, Z1, -, Zn).

According to the forward rotation or the reverse rotation of the rotary shaft of the DC motor, the signal (Z0, Z1, -, Zn) of Z position are incremented or decremented for every rotation of the rotary shaft of the motor, and the information on the angle of rotation of the rotary shaft based on the absolute origin position ($Z\alpha$) and the A/B phase signals is incremented or decrement also.

In the lower stage of Fig.6, as a multi rotation absolute signals, for example, Z1-A phase-20435 to which it corresponds to the position P1 of one rotation is shown by the example.

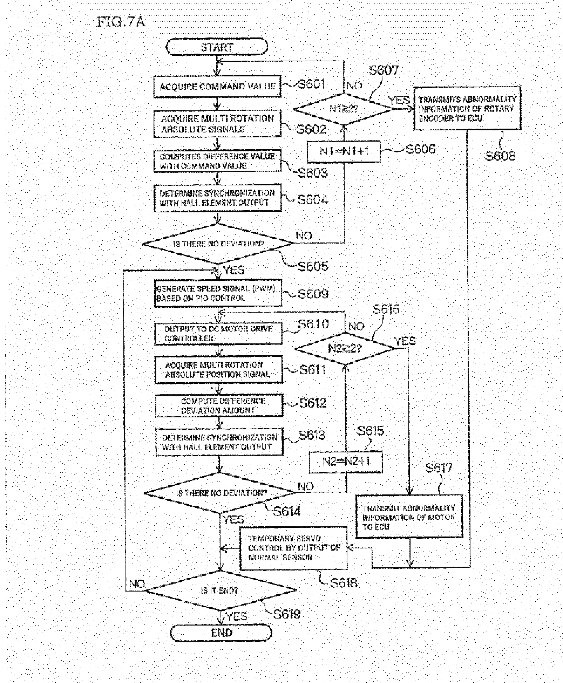

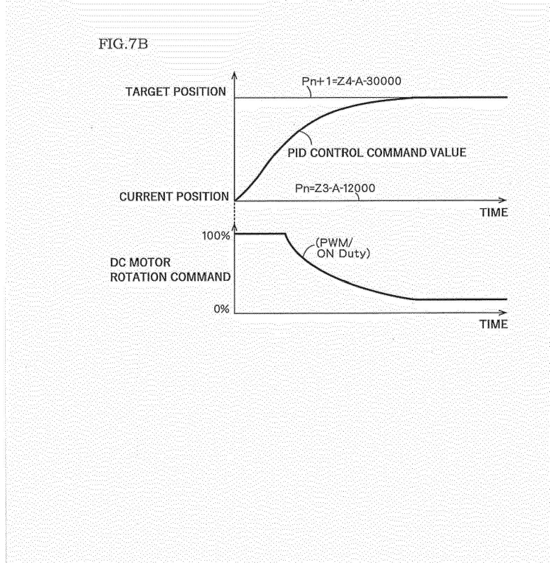

Next, operation of the DC servo controller 345 and the PWM signal generator 346 in the normal operation processing mode is described referring to Fig.1 and Figs. 7A and 7B.

The DC servo control unit 345 recognizes the current rotation angle of the rotary shaft 13 of the DC motor 100, and hence the present absolute origin position of the driven member 50, based on the signals of the rotation speed, the rotation angle and the multi rotation/absolute position signal recorded in the EEPROM in the form of a table like the Table 2. The DC servo controller 345 calculates speed commanding values from the current position to a target position of the driven member 50, etc. based on these pieces of information. The PWM signal generator 346 generates PWM signals for controlling rotation of the DC motor 100 in response to the output of the DC servo controller 345, and outputs the signals to the DC motor drive controller 41.

Fig.7A is a flow chart which shows the details of operation of the DC servo controller 345 and the PWM signal generator 346 in a normal operation processing mode.

The DC servo controller 345 acquires, first, information of position of each target and target speed as a command value based on a preset operating pattern of the DC motor, from the memories 330 such as RAM (S601). In the memory, a motor drive signal presuming PID control is stored as the target speed corresponding to the operation pattern of the DC motor, as an operation pattern of the DC motor corresponding to each target position of a wiper arm blade as the driven member, for example, data of the PWM control signal is stored.

As an example of the operation pattern including plural positions of each target, for example, in a wiper motor, it is an acceleration region from an inversion position of the wiper arm blade to an acceleration end position, it is a constant speed region from the end position of acceleration to the start of braking position, and it is a deceleration region from the brake start position to the reverse position. The DC motor is subjected to the PWM control according to such a predetermined operation pattern.

The speed (PWM) signal generator 346 acquires the multi rotation absolute signals (S602) and computes a difference value with the command value (S603). The sensor error decision processing unit 348 determines synchronization of the MR sensor output with the Hall elements output in the synchronization determination processing (S604). In the determination of the presence or absence of "deviation" (S 605), if the difference value exceeds the allowable value, it is determined that there is "deviation".

In the synchronization determination processing, the information of the actual phase difference (mechanical angle) $\Delta\theta$ obtained as the output of the rotation sensor unit 20 and the information of the phase difference (mechanical angle) $\Delta\theta_0$ for determination previously recorded in the EEPROM are compared, and if there is no difference between the MR sensor output and the Hall elements output value, they are in synchronization, and if there is a substantial difference, it is judged that they are not synchronized.

Based on these results, when the determination is the second determination (S606, S607), the sensor error determination processing unit 348 determines that the rotation sensor unit 20 has an error including a deviation and transmits abnormality information to ECU 500 (S608). When the EEPROM itself instead of the rotation sensor unit 20 has abnormalities, it can check at this time also.

By the judgment (S605) of the deviation, when there is "no deviation", the PWM signal based on the PID control is generated (S609), and the signal is output to the DC motor drive controller 41 (S610). And the multi rotation/absolute position signal based on the A/B phase signals from the rotation sensor unit 20 are acquired (S611), the difference deviation amount of the PWM signal, and the multi rotation/absolute signal is computed (S612), and synchronization determination of the MR sensor output with the Hall elements output is further performed by the sensor error decision processing unit 348 (S613).

Next, the existence of the deviation in PID control is judged (S614). When difference deviation amount exceeds an acceptable value continuously twice, or when not synchronizing (S615, S616), it is judged that the DC motor being unusual, and the abnormality information of the DC motor is transmitted to the ECU 500 (S617).

When there is "no deviation", a new PWM signal is generated (S609) and the same processing is hereafter repeated until there are instructions of the end of operation (S619).

On the other hand, when the difference deviation amount exceeds the allowable value continuously twice or when it is judged they are not synchronized (S 615, S 616), the sensor error determination processing unit 348 determines that the DC motor including the rotation sensor unit is abnormal and transmits error information of the DC motor to the ECU 500 (S 617). Then, an emergency servo control of the driven member by the output of the normal sensor in the rotation sensor unit 20 or an emergency operation mode is executed (S 618). Thereafter, the operation of the driven member is ended (S 619). After S608, ends operation of the driven member similarly (S619).

Among the rotation sensor unit 20, whether which of the MR sensor and the Hall elements sensor is normal can be judged to be abnormal if there is a large change that does not occur in normal operation. For example, past number of output pulses of each sensor recorded on the memory is compared with current number of output pulses, and when there is a big change which does not arise in the usual operation, it can be judges with the sensor being unusual. When both of outputs of the MR sensor and the Hall elements sensor have abnormalities, it changes into a state where safety is securable, and the operation of the driven member is stopped.

The rotation speed of the DC motor is arbitrarily controllable by duty ratio of on period of the PWM signal. It is also possible to perform forward rotation regenerative braking or reverse rotation regenerative braking at an arbitrary speed, by combination of ON/OFF periods of the switching elements (SW1 - SW4) constituting the driving circuit or by controlling of the duty ratio of the ON period.

Fig.7B shows an example of control of the DC motor which used the data of the EEPROM. Here, to describe simply, the example of an open loop control is shown. The DC motor is accurately and quickly driven from the current position $P_n$ to the target position $P_{n+1}$ by the information of the multiple rotation/absolute position signals recorded in the EEPROM and the rotation command combining the PID control and the PWM control.

Thus, the controller 300 of the DC motor continues the drive of the DC motor, recognizing the operating state of the wiper arm one by one based on the A/B phase signals from the rotation sensor unit 20. Thereby, the wiper arm performs a swinging wiping operation based on the operation pattern within a predetermined angle range.

As embodiments of driven member mounted on the automobile according to the present invention, besides examples of mounted wiper and the like, there are a power seat, a power window, an electronic turbocharger, a water pump, a lubricating oil pump, etc. The present invention is also applicable to a drive source of the automobile itself, and it is also applicable to a DC servomotor which drives a driven member which requires multi rotation absolute signals in fields other than automobiles, for example, a robot or the like.

According to the one embodiment of the present invention, as a means for determining the existence of failure of a rotation sensor containing a MR sensor, since position information with relatively high precision is generated by using output signals of inexpensive Hall elements, so that it is possible to provide a control device for a DC motor which can be inexpensive and highly reliable.

Further, as position information for executing a backup control when the MR sensor fails, comparatively high accuracy position information using the output signal of the Hall elements can be generated, so that it is possible to provide a control device for a DC motor which is inexpensive and highly reliable.

Since a magnet is used in common, the GMR sensor and the Hall elements of the rotation sensor unit are simple in construction and can be made compact. By adopting inexpensive Hall elements, in spite of being reliable, a small and inexpensive rotation sensor unit can be provided.

Even when the MR sensor fails, it is possible to provide a control device for a DC motor that can continue a servo control with comparatively high accuracy by using the output signal of the Hall elements.

[Embodiment 2]

Next, the second embodiment of the present invention is described. In this embodiment, the present invention is applied to an apparatus for driving a driven member whose rotational angle of the rotary shaft of the DC motor is within ± 1 to 2 rotations.

Especially, when angle of rotation of the rotary shaft of the DC motor which drives the driven member is less than 360 degrees, generates absolute position signal within one rotation of the rotary shaft based on the position of the absolute origin position of the MR sensor, A/B phase signals and the output signal of at least three Hall elements, stores the absolute position signal within one rotation in the EEPROM, and drives the DC motor using the information.

According to this embodiment, angle of rotation of the driven member is controlled with high precision using the absolute position signal of one rotation of the MR sensor. As a means for determining the existence of failure of the rotation sensor containing the MR sensor, the position information on comparatively high accuracy is generated using the output signal of the inexpensive Hall elements, so that it is possible to provide a control device for the DC motor capable of inexpensive and highly reliable failure judgment. Even when the MR sensor fails, control can be continued with comparatively high precision using the output signal of the Hall elements.

[third Embodiment]

Next, the third embodiment that applied the present invention to a brushless DC motor is described. Below, the component which is different from the first embodiment is mainly described, and it replaces with by the description of the first embodiment about what has the same function as the first embodiment.

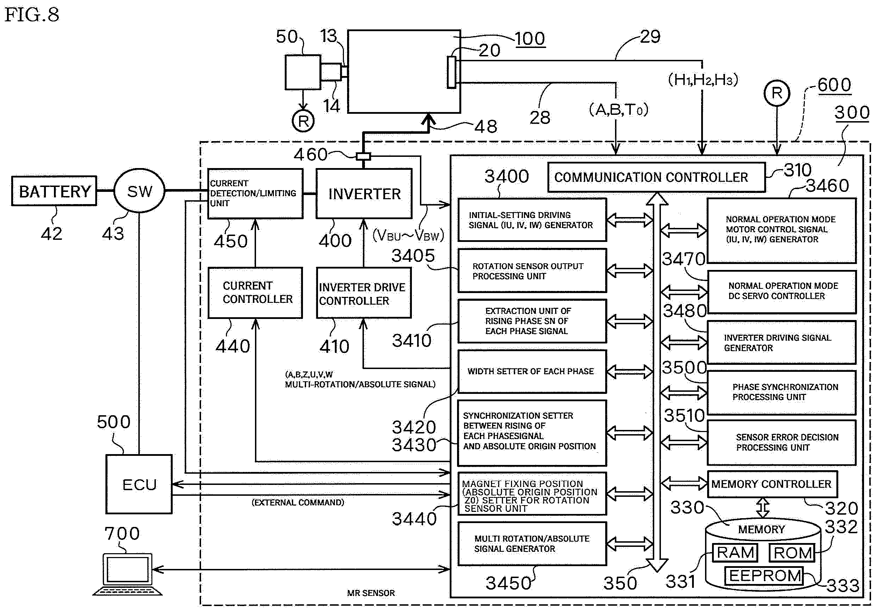

Fig. 8 is a functional block diagram of a control device for a brushless DC servo motor according to the third embodiment of the present invention. The brushless DC servo motor 100 is a three phases brushless DC servo motor (Herein after, brushless DC servo motor) of an inner rotor form. Reference numeral 300 denotes a control unit of the brushless DC servo motor.

A permanent magnet type rotor is integrally formed with a rotary shaft 13, and they are rotatably held by bearings provided in a motor housing of the brushless DC servo motor. Electric power with which current is controlled by a current controller 440 is supplied to each stator coil of the three-phase circuit (U phase, V phase, W phase) of brushless DC servo motor 100, according to driving torque and speed command, etc., from a power supply terminal 48 via a switch 43 and an inverter 400 from a battery 42. An inverter drive controller 410 drives the inverter 400 to control the phase of the current supplied to each stator coil and rotates the rotor, based on a command from the control unit 300.

The control unit 300 controls the maximum electric power and current which are supplied to the inverter 400 via a current detection/limiting unit 450 based on the current detected by the current detection/limiting unit 450. Reference numeral 460 is a counter electromotive force detector, which detects the counter electromotive force ($V_{BU}$, $V_{BV}$, $V_{BW}$) of the coil of each phase of the brushless DC servo motor 100 at the time of initial setting and transmits them to the control unit 300, as mentioned in detail later.

A rotation sensor unit 20 which functions as a rotary encoder is provided to the one end part of the rotary shaft 13, and the rotation sensor unit outputs an incremental signal (A, B) accompanying rotation of the rotary shaft 13.

The rotation sensor unit 20 comprises a magnet fixed to an end surface of the rotary shaft 13, and a plurality of Hall elements fixed to the motor housing in a position separated from the magnet and opposes to the magnet. This rotation sensor unit 20 is connected to the controller 300 via telecommunication cables 28 and 29. The rotation sensor unit 20 generates signal of magnet absolute origin position $T_0$ which corresponds to the Sn in a positioning information generator of the rotation sensor unit. The controller 300 of the brushless DC servo motor 100 is mounted on a printed circuit board 600 of one sheet with the inverter 400 and the inverter drive controller 410, for example.

The control unit 300 of the brushless DC servo motor has functions such as a communication controller 310, a memory controller 320, an initial-setting driving signal (iu, iv, iw) generator 3400, a rotation sensor output processing unit 3405, an extraction unit of rising phase Sn of each phase signal 3410, a width setter of each phase 3420, a synchronization setter between rising of each phase signal and absolute origin position 3430, a magnet fixing position

(absolute origin position $Z_0$) setter for rotation sensor unit 3440, a multi rotation/absolute signal generator 3450, a normal operation mode motor control signal (iu, iv, iw) generator 3460, a normal operation mode DC servo controller 3470, an inverter driving signal generator 3480, a phase synchronization processing unit 3500 and a sensor error decision processing unit 3510 etc.

Similar to the first embodiment, the rotation sensor output processing unit 3405 gives an address to the output (A, B, $T_0$) of the rotation sensor unit 20, and records them in the memory 330 with the information on angle of rotation by the Hall elements.

The phase synchronization processing unit 3500 generates information on mutual phases relation for synchronization with the absolute origin position $Z_0$ and the reference position $P_{h1}$ of Hall elements H1 (or the reference positions $P_{h2}$ and $P_{h3}$ of the Hall elements H2 and H3 are included). The phase synchronization processing unit 3500 and the sensor error decision processing unit 3510 also have the same function as corresponding units of the first embodiment.

Although the control unit 300 also has a function for generating a command value of the current to the current control unit 440 similar to the known brushless DC servo motor, since this point is not the characteristics of the present invention, so that it is omitted the description of that composition hereafter.

The control unit 300 is connected with the battery 42 via an electric power switch 43, and generates a control signal based on input signals such as external commands from an upper level computer, for example, an ECU (Electric Control Unit) 500 mounted on the automobile, and digital value of the A/B phase signals which are outputs of the MR sensor 22, etc. and in the control unit 300 of the brushless DC servo motor, the multiple-rotation absolute signals of Z phase signal and each of U, V, W phase signal are generated based on the A/B phase signals which are the outputs of the rotation sensor unit 20. A part of information on the control unit 300 is transmitted also to the ECU 500.

The control unit 300 is configured to be able to communicate with a terminal device 700 in a factory manufacturing the brushless DC servo motor via a communication network. The terminal device 700 is configured to be capable of mutually communicating with another information processing device, for example, a computer and a server in a factory production line via the communication network. In principle, the initial setting of the brushless DC servo motor starts up a program for initial setting of the control unit 300 with the terminal unit 700, and the initial setting is performed. It is also possible to perform the initial setting of the brushless DC servo motor in scenes other than the factory line of the factory.

Based on various kinds of signals of the command value and the rotation sensor unit 20 which are stored in the memory 330, the control unit 300 calculates the rotating position of the brushless DC servo motor which drives the driven component 50, namely, the rotating position of the driven component 50, and generates information of inverter driving signals that supply a current to each of U, V and W phase coils of the brushless DC servo motor so that the driven member 50 can be operated at each of predetermined positions. The information on the inverter driving signal for the DC servo motor drive based on these signals are output to the inverter drive controller 410 via a serial communication line from the control unit 300 of the brushless DC servo motor.

In the normal operation mode, a servo control of brushless DC servo motor 100 is performed with the control unit 300 based on the information on the rotary encoder (the rotation sensor unit 20). The driven component 50 is an object of the servo control by the control unit 300. The rotational speed, the rotating position, and the movement magnitude, etc. of the driven component 50 are detected with the apparatus encoder provided on the driven component, and the information (R) on the apparatus encoder is fed back to the control unit 300 and is used as reference information of the servo control.

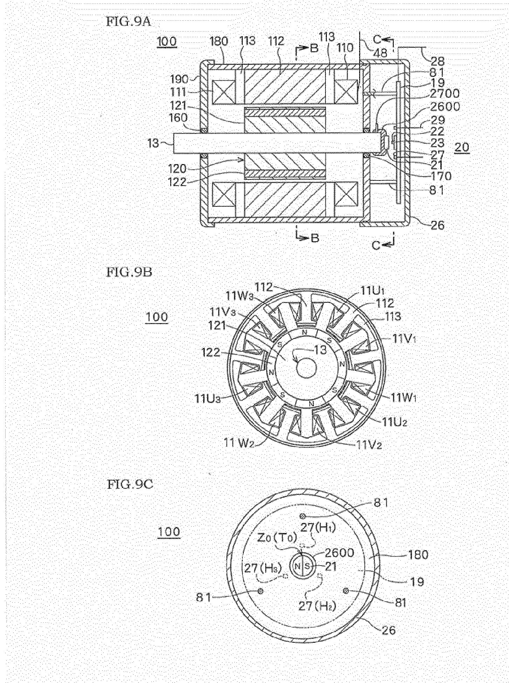

Next, the detailed configuration of an example of the brushless DC servo motor according to the third embodiment is described. Fig. 9A is longitudinal sectional view of the brushless DC servo motor according to the third embodiment, and Fig. 9B is a B-B cross sectional view of Fig. 9A.

In the brushless DC servo motor 100, three-phase stator cores 110 are fixed inside a cup-shaped motor housing 180. The stator cores 110 comprise nine field cores 112 arranged at equal intervals circumferentially, and field coils 111 rolled around each of field cores via the insulating members 113 in each of slots. The field core 112 is constituted laminating two or more steel plates on an axial direction. The field coils 111 wound around the field cores 112 are classified into field coils of U phase, V phase and W phase, i.e., U phase (11U1 - 11U3), V phase (11V1-11V3), and W phase (11W1 - 11 W3), according to the phase of the voltage applied from the inverter 40.

On the other hand, the rotor 120 which has a permanent magnet of eight poles is integrally formed with the rotary shaft 13, and these are rotatably held by a pair of bearings 160 and 170 provided in first end cover 190 and in the motor housing 180.

The rotor 12 is an eight poles rotor which have a rotor yoke 121 fixed to the rotary shaft 13, and eight permanent magnets 122 fixed to the outer peripheral part of the rotor yoke. The rotor yoke121 is formed by laminating a plurality of disk-shaped steel plates in the axial direction and integrating them. The outer peripheral surface of the rotor 120 is opposing to the teeth of the stator core 110 via a gap.

The specific composition of the brushless DC servo motor 100, such as number of the slot, number of poles of the magnet, specific constitution of the motor housing 180 and covering, are not limited to the above embodiment. For example, the direction of the cup shaped motor housing 180 is reversed left and right, the side cover in which the bearing 170 holding part and the support are formed is fixed to the opening on the right-hand side of motor housing, and further it may be made to fix a second end cover 26 on the side cover.

Next, based on Figs. 9A and 9C, the relation of the brushless DC servo motor and the rotation sensor unit is described. Fig. 9C is a C-C cross sectional view of Fig. 9A.

The rotation sensor unit 20 comprises a plate-like magnet 21 which is fixed to the end surface of the rotary shaft 13 via a fixing member 2600, a pair of MR sensors (a magnetic-resistance-element sensor) 22 which are separated in the position which opposes to the magnet 21 and fixed on the printed circuit board 19, a processing circuit unit 23, and three Hall elements 27. The MR sensor 22, the processing circuit unit 23, and the Hall elements 27 are provided on the printed circuit board 19. This printed circuit board 19 is fixed to the motor housing 180 of the servo motor 100 by supports 81, in a relationship that the MR sensor 22 opposes to the magnet 21, and each rotation center of the MR sensor 22, the Hall elements 27 and the magnet 21 and the axis of the rotary shaft 13 coincide.

The fixing member 2600 can be freely rotatable in a circumferential direction to the rotary shaft 13 in the state which the rotary shaft 13 is inserted in the cup shape hollow section, and the fixing member 2600 is fixed to the rotary shaft 13 by a lock-pin 2700 or adhesives. On Drawings, the protruding length of the rotary shaft 13 from the end of the motor housing 180 is largely displayed. Practically, it is desirable short as much as possible for the protruding length, for example, about 3 mm.

In Fig. 9C, the magnet origin position ($T_0$) should be agreement with the absolute origin position ($Z_0$) on the rotary shaft.

According to the present invention, in the final stage of the manufacturing process of the brushless DC servo motor, the initial setting of a brushless DC servo motor is performed, and the magnet is fixed to the rotary shaft so that the magnet origin position ($T_0$) and the absolute origin position $Z_0$ coincide. Therefore, the absolute origin position $Z_0$ on the rotary shaft with respect to the driving signal is obtained in the stage after the stator and the rotor of the motor are assembled.

Specifically, it is in the state where the second end cover 26 is not fixed to the right lateral of the motor housing 180, the magnet 21 is temporary fixed to the rotary shaft and driving the brushless DC servo motor, then, the information on the phase of the output of the MR sensor, the information on the phase of integral value peak of counter electromotive force of the field coil of U phase, and the information on the phase of the rising phase information of the U phase coil corresponding to zero of an inverter driving signal are obtained. Based on those synchronous relationships of each of these phases, the absolute origin position $Z_0$ on the rotary shaft is obtained.

Then, the position of the magnet 21 on the rotary shaft is determined so that the phase of the magnet origin point ($T_0$) and the absolute origin position $Z_0$ coincide with each other, and then the magnet 21 is formally fixed to the rotary shaft.

The work of this initial setting is processed by workers themselves, using an arm of a working robot with a camera function, etc. for example. For this initial setting operation, and to ensure a predetermined magnetic sensitivity by a pair of MR sensors 22, it is desirable that the gap between the right side surface of the motor housing 180 and the pair of MR sensors 22 is a predetermined small gap, for example, a gap of 20 mm to 30 mm. Specific method of the initial setting is described in detail later.

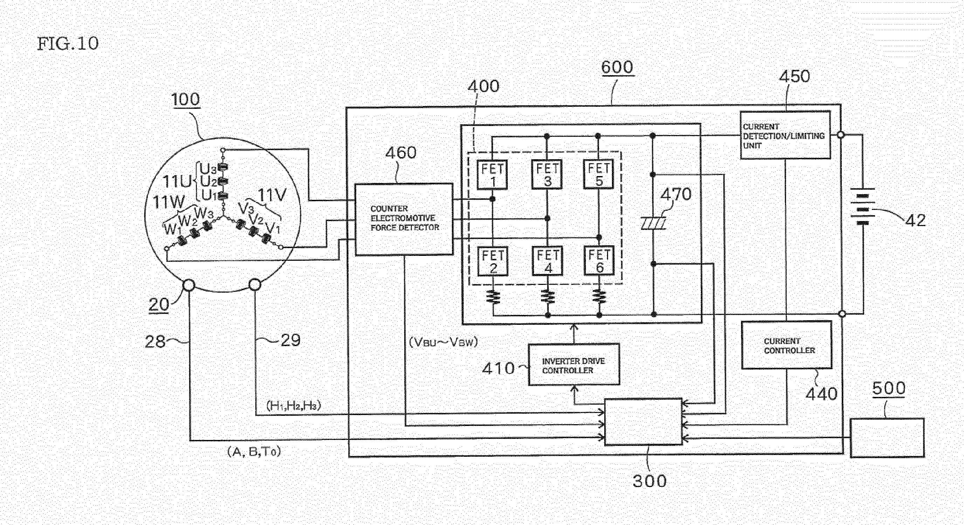

Fig. 10 is a diagram showing an example of a drive circuit of the brushless DC servo motor in the third embodiment.

In the stator core 110, each of the field coils 11U to 11W of each phase, coils of U1, U2 and U3 are connected in series, coils of V1, V2 and V3 are connected in series, and coils of W1, W2 and W3 are connected in series, respectively. One end of each of these three coil groups is connected by a neutral point.

The inverter 400 comprises six switching elements FET1-FET6 each of which comprising a FET transistor, one electrolytic capacitor 470, and resistance elements, etc. One end of each of the switching elements FET 1 to FET 6 is connected to one of the coils 11 U to 11 W of the U phase, the V phase, and the W phase of the brushless DC servo motor 100, and the other end is connected to the DC power supply 42. A voltage, that is, an inverter driving signal generated by the inverter drive controller 410 is applied between the gate and the source of each of the switching elements FET 1 to FET 6. The electrolytic capacitor 47 is used for smoothing power supply voltage.

In the normal operation mode, the control unit 300 of the brushless DC servo motor continues the operation of the brushless DC servo motor 100, for example, a sine wave drive, based on the operation command and the control signal generated based on the normal operation mode motor control signals (iu, iv, iw) and the A/B phase signals from the rotation sensor unit 20. Thereby, the driven component 50 performs operation, in a predetermined working range, based on a predetermined operating pattern.

The control unit 300 of the brushless DC servo motor can also be fixed to the position where is an inner side surface of the motor housing 180 or the second end cover 26 and near the rotation sensor unit 20. In this case, the inverter 400 is connected to the power supply line near the power supply terminal 48 to the field coil 111. Depending on the environment where the brushless DC servo motor is installed, the printed circuit board 600 may be installed on the outside of the brushless DC servo motor.

The following respective functions realized by executing a program shown in the functional block form in Fig. 8 are displayed as an example; the communication controller 310, the memory controller 320, the initial-setting driving signal (iu, iv, iw) generator 3400, the rotation sensor output processing unit 3405, the extraction unit of rising phase Sn of each phase signal 3410, the width setter of each phase 3420, the synchronization setter between rising of each phase signal and absolute origin position 3430, the magnet fixing position (absolute origin position ($Z_0$) setting unit for the rotation sensor unit 3440, the multi rotation/absolute signal generator 3450, the normal operation mode motor control signal (iu, iv, iw) generator 3460, the normal operation mode DC servo controller 3470, the inverter driving signal generator 3480, the phase synchronization processing unit 3500, and the sensor error decision processing unit 3510.

The division of each function is arbitrary, and the plurality of functions may be realized by a common program, or a specific function may be realized by a plurality of different programs and IC circuits. When a brushless DC servo motor is used as a driving source of each apparatus of the automobile, each function of the controller 300 may also be incorporated into an ECU for engine control mounted on the automobile. The function of the DC servo motor drive controller 410 or the current control 440 may also be incorporated into the ECU mounted on the automobile.

A part of program and the data of the memory related to the initial setting of the control unit 300 are shared with a terminal unit 700 in a factory, or a server, and they may be constituted so that the terminal unit 700 in the factory may share a part of processing of initial setting.

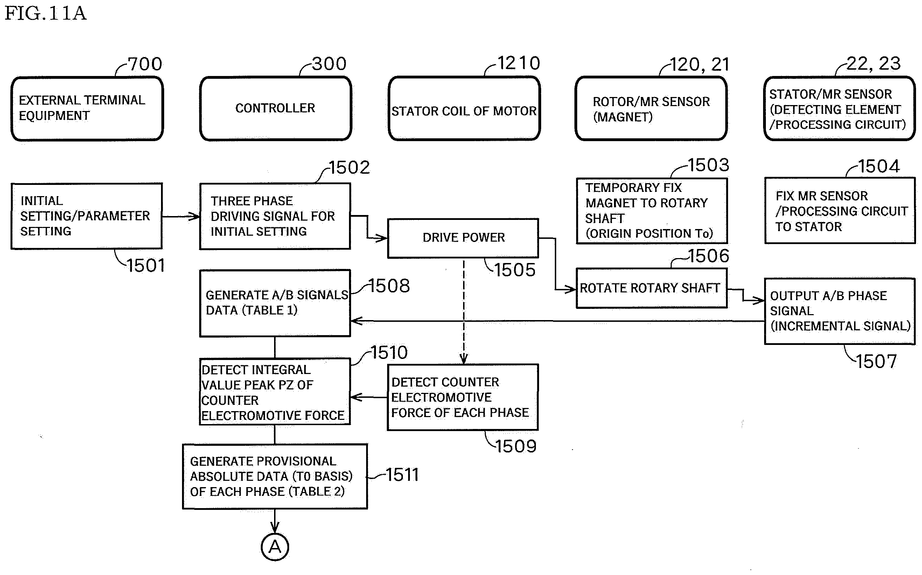

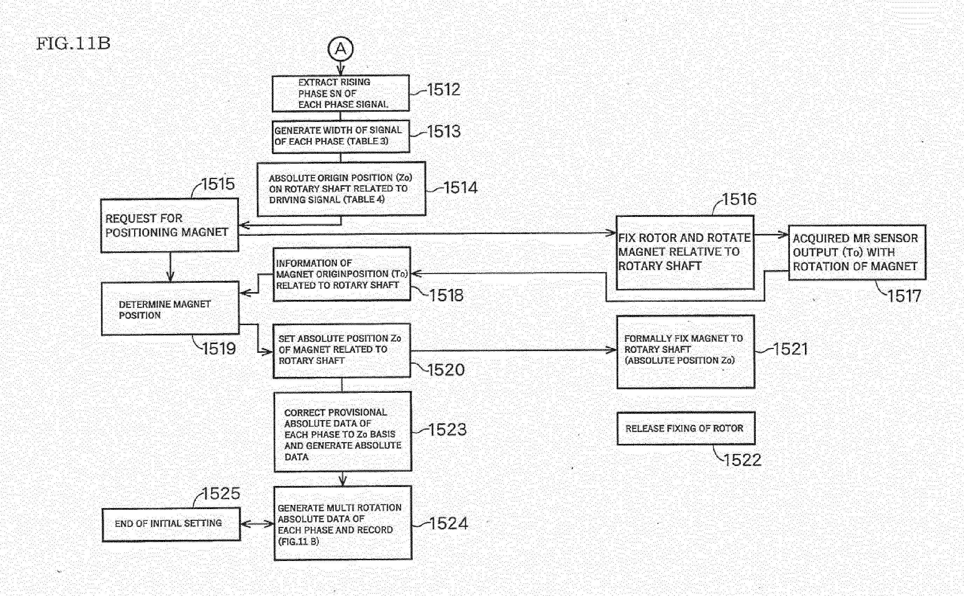

Next, the summary of initialization processing in the third embodiment is described referring to a time chart of Fig. 11.

The initial setting is started by starting a program related to initial setting of the control unit 300 and setting a required parameter from the external terminal equipment 700 (1501).

In this stage, the magnet 21 is temporary fixed to the rotary shaft 13 of brushless DC servo motor 100 in any position (the magnet origin position ($T_0$)) (1503), the pair of MR sensor 22 and the processing circuit unit 23 are fixed to the side surface of the motor housing 180 (1504), and the second end cover 26 has not been fixed to the right lateral of the motor housing 180 yet.

In the control unit 300, along with activation of the program related to the initial setting, an arbitrary (predetermined) driving signal for the initial setting is generated (1502), and the drive power is supplied to the three-phase stator coil of the DC servo motor (1505). In connection with this processing, the rotary shaft and the magnet 21 of the MR sensor 20 rotates (1506), and the output A/B phase signals and the information on the magnet origin position ($T_0$) are generated by the MR sensor (the sensor 22, the processing circuit unit 23) (1507). In the control unit 300, a table of data of provisional A/B phase signals based on the predetermined driving signal, for example, a rectangular wave signal, is generated (1508).

Then, the counter electromotive force of each phases in accordance with supply of the drive power to the stator coil is detected (1509), and the integral value peak Pz of the counter electromotive force is detected (1510).

On the other hand, from the output signals of A/B phase of the MR sensor stored as a Table based on the initial-setting driving signal (iu, iv, iw), phase information of each of the U, V, and W phase signals are generated according to the number of poles of the rotor 12. The phase information is a signal that rises at positive/negative rotation speeds of the motor in both forward and reverse directions, for example, at intervals of 120° in terms of electrical angle, and is necessary to rotate the motor by one rotation. In this embodiment, to rotate the rotor 12 once per mechanical angle of 45° (every 4500 pulses), a table of the phase information of each signal of U phase, V phase, and W phase is generated.

Next, the magnet origin position ($T_0$), the output signals of A/B phases, rising phase Sn of each phase signal of U phase, V phase, and W phase are synchronized, and the table of phase information is generated as the provisional absolute data ($T_0$ basis) of each phase (1511).

Based on the phase of the integral value peak Pz obtained before, the rising phase Sn of each signal of U phase, V phase, and W phase are extracted (1512).

For the signals relating to the U, V, W phase coils, a width of the Z phase based on the $T_0$ basis is determined. Then a table of the provisional absolute data which added the width signal of each phase is generated (1513). This table is recorded in the EEPROM of the control unit 300.

In this stage, it is not clear how the magnet origin position ($T_0$) corresponds to the absolute origin position of the MR sensor.

Next, in the synchronization setter between rising of each phase signal and absolute origin position, an absolute origin position ($Z_0$) of the rotary shaft with respect to the driving signal is obtained on the base of the relationship between the output of the MR sensor, the integral value peak and the rotation angle of the rotary shaft (1514).

Thus, data on the "absolute origin position ($Z_0$) on the rotary shaft" based on the information on the integral values of the A/B phase signals and the U phase counter electromotive force corresponding to the initial setting driving signal is obtained.

Upon completion of the series of processes so far, then sends a request for positioning the magnet relative to the rotary shaft, from the control unit 300 to the external terminal device 700 (1515).

In response to the request, the control unit 300 sends an instructions "Fix the rotor, remove the temporary fixation of the magnet, rotate the magnet relative to the rotary shaft " to a working robot or a worker (1516).

The information on a magnet origin position ($T_0$) is acquired from the MR sensor 20 with rotation of the magnet 21 (1517). The information on the magnet origin position ($T_0$) of the magnet 21 with respect to the rotary shaft is transmitted to the external terminal equipment 700 via the control unit 300 (1518). The working robot or the worker, etc. determines the position ($T_0 = Z_0$) which should fix the magnet to the absolute origin position ($Z_0$) on the rotor based on the information on the magnet origin position ($T_0$) (1519).

In connection with this determination, the position to the rotary shaft of the magnet is set as the absolute position Z0 (1520), and the working robot fixes the magnet 21 to the rotary shaft (1521). The control unit 300 sends an instruction to "release fixing the rotor" to the working robot (1522).

Then, the position data of all the signals acquired from the rotation sensor unit are absolutely changed into position data of the origin position $Z_0$ basis, and they are associated with the Z phase signal and "the width of Z phase", and the address of EEPROM are given. In this way, the position data is converted into the multiple-rotation absolute signals that represents the absolute origin position of the rotary shaft 13. That is, the provisional absolute data (($T_0$) basis) of each phase signal is corrected to $Z_0$ basis and a table of absolute data is generated (1523), and the table is recorded in the EEPROM.

Similarly, the multi rotation absolute data of each phase is generated and is recorded in the EEPROM333 (1524). In response to this processing, the initial setting is ended (1525).

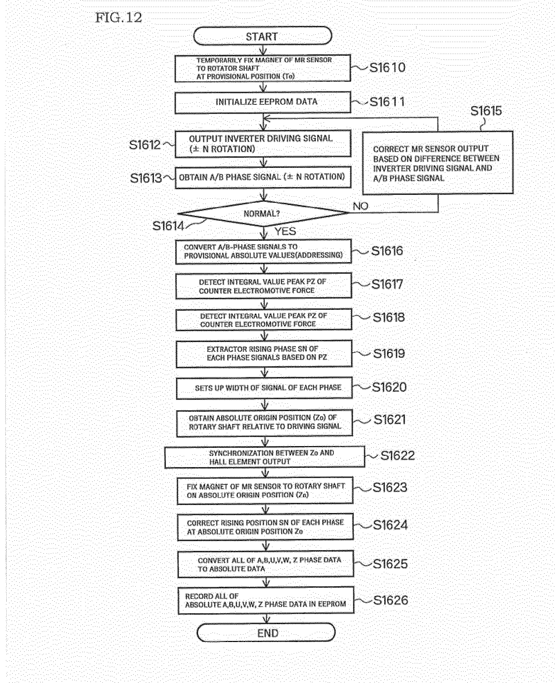

Next, the details of the self-initialization process of the controller 300 in the processing at the time of starting are shown in Fig.12. In the self-initialization processing, an initial-setting processing is performed.

In the initial-setting processing, the magnet 21 of the MR sensor is temporary fixed to the rotary shaft 13 in a provisional position (T0) (S1610). Next, EEPROM data is initialized (S1611), and the initial-setting driving signal for the initial setting, for example, a PWM signal ($\pm$ N rotation) for inverter driving, is generated by the initial-setting driving signal (iu, iv, iw) generator 3400. The initial setting driving signals (iu, iv, iw) is sufficient that can drive the brushless DC servo motor by only one to several rotations in each of the positive and reverse directions across the zero rotation. This initial-setting driving signal is output to the inverter driving signal generator 3480 (S1612), and the brushless DC servo motor 100 is driven by the generated inverter driving signal (PWM signal).

The first driving signal at the time of the initial setting is replaced with the DC servo control signal of a brushless DC servo motor. Although the objective brushless DC servo motor is originally controlled to be closed loop, however, according to the initialization processing of the invention, in the state of open control, electric power is supplied with the initial-setting driving signal for the brushless DC servo motor to each coil of U phase, V phase, and W phase, and the brushless DC servo motor is driven (S1613).

The obtained A/B phase signals are compared with the command value of the initialization processing, and it is determined whether the cumulative addition value is normal or not. That is, it is determined whether or not the cumulative addition value corresponds to the command value of the inverter driving signal and the response state of the brushless DC servo motor or the MR sensor are normal (S1614). When it is determined that there is an abnormality in the correspondence relationship, the output correction process such as correction of the temperature characteristic of the MR sensor etc. is separately performed so that the command value corresponds to the cumulative added value of the A/B phase signals (S1615).

If the normal condition does not occur even if the output correction process is performed a plurality of times, since another cause such as an abnormality in the EEPROM itself can be considered, so any error display is made.

When it judged with the MR sensor being normal by S1614, or when the correction process is made, next, the initialization processing converts the A/B phase signals acquired from the rotation unit 20 to absolute values (S1616). That is, to each data of the A/B phase signals, addresses for writing is given (addressing) for storing to the EEPROM (address attachment). Thus, the data of a provisional absolute signal is recorded in the EEPROM via the RAM.

Next, the processing shifts to a series of processing for obtaining the absolute position of the magnet with respect to the rotator shaft, and for enabling generation of absolute signal data based on the absolute position information.

First, the counter electromotive force of each phase in accordance with supply of the drive power to a stator coil based on first driving signal is detected, and the integral value peak Pz of the counter electromotive force is detected (S1617).

The counter electromotive force detection unit 460 detects the counter electromotive forces $V_{bu}$, $V_{bv}$, $V_{bw}$ of the time series of the coils of each phase and transmits them to the control unit 300. In the control unit 300, the extraction unit of rising phase Sn of each phase signal 3410 performs an integral operation of the counter electromotive force of each phase and detects a peak position Pz where the integral value exceeds a predetermined threshold value.

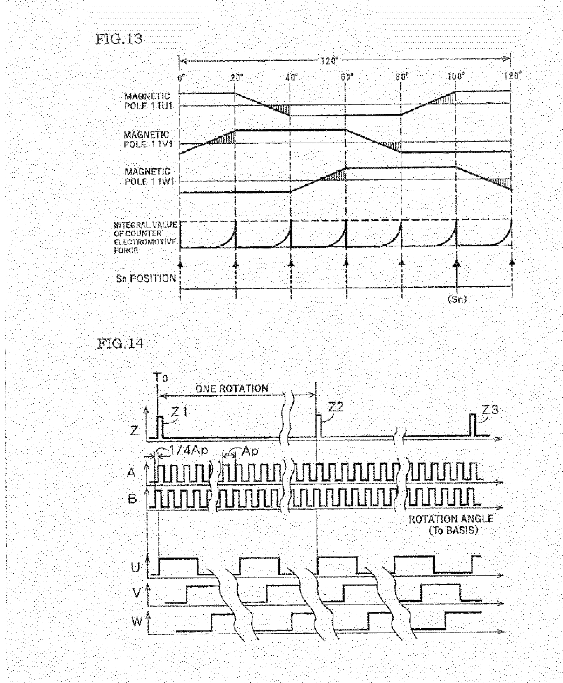

Referring to Fig. 13, and Fig. 14A, about detection of the counter electromotive force is described.

The rotor 120 rotates by rotating the phase of the current supplied to each field coils 11U, 11V, and 11W of the stator. Depending to the size and direction of the current supplied to each of the field coils, counter electromotive force $V_{bu}$, $V_{bv}$ and $V_{bw}$ occur in each of field coils.

Next, the information on the positional relationship (magnet origin position ($T_0$)) of the MR sensor to the rotary shaft is obtained, from a relationship between the synchronization signals of the A/B phase output signals from the rotation sensor unit and the driving signal to the stator coil of any one phase.

Therefore, first, the brushless DC servo motor 100 is driven in both directions of normal rotation and an inversion rotation. For example, driving signals of U, V, and W phases for generating one revolution in each of forward and reverse directions are generated (S1618). Namely, the synchronization setting unit of each phase rising and absolute origin position 3430 has a function for generating the phase information of the U phase, the V phase and the W phase of the magnet origin position ($T_0$) basis, corresponding to the initial setting driving signals (iu, iv, iw) and on the basis of the number of poles of the permanent magnet of the rotor 120, eight poles in this embodiment.

Fig. 13 is a diagram showing relation of the counter electromotive force $V_{bu}$, $V_{bv}$, and $V_{bw}$ in each of field coils 11U-11W, its integral value peak, and the positioning information (Sn).

The integral value peak corresponds to a point in time at which the peak of each integral value exceeds a predetermined threshold and generates this as positioning information (Sn).

Here, focusing on the integrated value peak of the counter electromotive force of a specific phase, for example, U phase, the integral value peak is acquired in the position at 40° and 100° within the scope whose angle of rotation (electrical angle) is 120°. That is, about the field coil (11U1 - 11U3) of U phase, 6 times of integrated value peaks are obtained per rotation (360°). Similarly, 6 times per rotation of integral value peaks are respectively acquired also about the field coil (11V1 - 11V3) of V phase, and the field coil (11W1 - 11 W3) of W phase.

Needless to saying, the position of this integral value peak varies depending on the configuration of each field coil of the stator.

About V phase and W phase also, positioning information (Sn) may be determined and may be stored in the EEPROM, respectively. The positioning information (Sn) may be generated for every rotation of the rotary shaft 13. Or as the positioning information, the signal of a different kind with which resolution differs, for example, about 1 to 2 times per rotation of rough signals, and about tens of times per rotation of dense signals may be combined.

Fig. 14 shows the relation of the signals of the A/B phase output from the rotation sensor unit 20, and each signal of Z phase, U phase, V phase, and W phase generated based on the A/B phase signals.

The phase information of each signal of U phase, V phase, and W phase in S1618 are different from the U, V, and W phase signals of the initial setting driving signal in S 1612 in that the phase information signal is completely synchronized with the phase of the A/B phase output signals from the rotation sensor unit 20 which functions as the rotary encoder.

The extraction unit of rising phase Sn of each phase signal 3410 extracts a driving signal rising position (Sn) of each driving signal in the phase data of the U, V, W phase driving signals shown in Fig. 14 (S1619).

In the example of Fig. 14, the rising position of the U phase signal and the rising position of the first A phase signal synchronized with the magnet origin position ($T_0$). Further, Z phase signals (Z1, Z2, --, Zn) are set according to the magnet origin position ($T_0$) to 360° (mechanical angle) of every rotation of the rotary shaft 13.

The excitation current to the U phase coil increases from the rising position of the first A phase signal corresponding to the magnet origin position ($T_0$) of Fig. 14, in other words, the rising position of the U phase signal. Therefore, in the example of Fig. 13, the position of one integrated value peak per rotation of the rotary shaft 13, for example the position of the integration value peak of the rotation angle $\theta$ = 100° (electrical angle) where the excitation current to the U-phase coil is in the increasing direction, is defined as one "positioning information (Sn)" for obtaining the absolute magnet origin position of the MR sensor, and is recorded in the EEPROM.

Returning to Fig. 12, next, the width setter of each phase 3420 sets up the width of the signal of each phase coil (S1620).

The accumulation value of each of A/B phase signals of each of U phase, V phase, and W phase, each of which the Z phase signal is acquired, are then, converted to the accumulation value for every (every 360 degree) rotation of the rotary shaft 13, and they are combined with Z phase signal respectively, then, address of the EEPROM is added to each of the combined data, thereby they become the data of the provisional multiple-rotation absolute signals, as shown in Table 3.

[Table 3]

| EEPROM ADDRESS | U/V/W PHASE | PROVISIONAL ORIGIN | ROTATION SPEEDS (Z PHASE) | A PHASE/ B PHASE | ABSOLUTE (CUMULATIVE ADDITION VALUE) | DIRECTION OF ROTATION |
|---|---|---|---|---|---|---|
| 0001520 | U-up | To | 1 | **A** | 0000001 | + |
| 0001521 | U | | 1 | **A** | 0000001 | + |

(continued)

| EEPROM ADDRESS | U/V/W PHASE | PROVISIONAL ORIGIN | ROTATION SPEEDS (Z PHASE) | A PHASE/ B PHASE | ABSOLUTE (CUMULATIVE ADDITION VALUE) | DIRECTION OF ROTATION |
|---|---|---|---|---|---|---|
| 0001522 | U | | 1 | **A** | 0000002 | + |
| 0001523 | U | | 1 | **B** | 0003002 | + |
| ⋮ | ⋮ | | ⋮ | ⋮ | ⋮ | ⋮ |
| 0003020 | V-up | | 1 | **A** | 0001501 | + |
| 0003021 | V | | 1 | **B** | 0001501 | + |

Next, in the synchronization setter between rising of each phase signal and absolute origin position 3430, the absolute origin position ($Z_0$) of the rotary shaft with respect to the driving signal is obtained on the basis of the relationship between the output of the MR sensor, the integral value peak and the rotation angle of the rotary shaft (S1621 of Fig. 12).

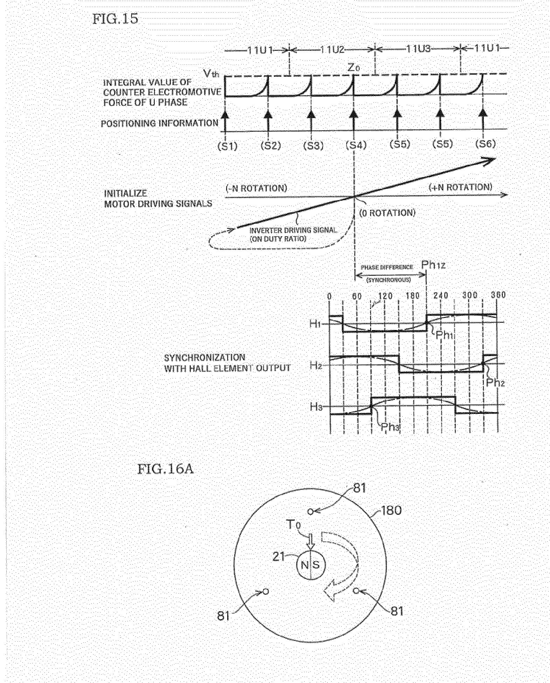

Fig. 15 is a time chart for explaining a process of obtaining an absolute origin position ($Z_0$) of a rotary shaft with respect to the driving signal.

If an inverter driving signal is output and brushless DC servo motor 100 is driven both forward and reverse directions, A/B phase signals with which it corresponds to a command value (driving signal of U, V, and W phase) is acquired from the rotation sensor unit 20. Also, in the extraction unit of rising phase Sn of each phase signal 3410, based on the data from the counter electromotive force detection unit 460, a plurality of corresponding peak positions, that is, a plurality of positioning information (Sn) are acquired, as described above.

The positioning information (Sn) on the rotary shaft to which it corresponds to the absolute origin position ($Z_0$) should be output for each rotation of the rotary shaft 13. Further, this positioning information (Sn) is defined as the position where corresponds at the rising time point corresponding to 0 degree of the A phase signal in the section which has an exciting current to the coil of any 1 phase of U, V, and W phases in the increasing direction. In this case, the rotary shaft needs to pass through this absolute origin position ($Z_0$) in the state of forward rotation of the brushless DC servo motor.

For that reason, in the synchronization setter between rising of each phase signal and absolute origin position 3430, as shown in the middle stage of Fig. 15, the brushless DC servo motor is started by the initial setting driving signal (inverter driving signal) and is rotated forward or reverse in a range including zero rotation there between.

When forward rotation of the brushless DC servo motor is carried out from -1 rotation to +1 rotation for example, while rotating from -1 rotation to zero rotation and rotating to +1 rotation, the integral value (peak value) of the counter electromotive force of U phase coil reaches threshold values, as shown in a middle stage and an upper stage of Fig. 15. Thus, positioning information (S1) - (S6) to which it corresponds at the rising time of each signal respectively are output.

Next, among those phases of the positioning information (S 1) to (S 6) where the integral value (peak value) of the U phase counter electromotive force reaches the threshold value, based on the above definition, it is determined that the phase of the positioning information (S4) is synchronized with the absolute origin position ($Z_0$) on the rotary shaft as shown in the middle stage of Fig. 15, because the ON duty of the PWM signal of the U phase coil of the inverter driving signal is synchronized with the positioning information (S4).

Instead of the U phase coil, positioning information synchronous with the absolute origin position ($Z_0$) on the rotary shaft may be output based on the exciting current to the V phase coil or the W phase coil. Time information such as a transmit timing of the command value (PWM signal) of the initial-setting driving signal, the signals of A phase signal, B phase signal, U phase, V phase, and W phase and a receiving timing of the positioning information may be used for determination of the absolute origin position ($Z_0$) on the rotary shaft.

Next, a synchronization processing necessary for the phase synchronization processing of the absolute origin position ($Z_0$) and the output of the Hall elements (information on the rotation angle) is performed as synchronization processing (S1622). Namely, in the phase synchronization processing unit 3500, based on the data recorded in the memory 330, as shown in the bottom of Fig.15, calculates $\Delta\theta_0$ which is the difference between the absolute origin position ($Z_0$) and the phase difference (mechanical angle) between the reference position $P_{h1Z}$ of the Hall element H1, and any digital value corresponding to the calculation result is recorded in the memory 330, as synchronization information for the synchronization determination processing, etc.

In this way, a table of absolute values is generated including the data that is a high precision "absolute origin position ($Z_0$) on the rotary shaft" data based on the information on the integral values of the high-resolution A/B phase signals and the U-phase counter electromotive force corresponding to the initial setting driving signal, and the data of phase information of each phase of the signals of each phase of U, V, W, that is, including the phase information of rotation speeds, each of the U, V, and W, and mutual phases relation for synchronization, based on the absolute origin position ($Z_0$).

When a series of processing so far are completed, then, from the control unit 300 to the external terminal equipment 700, a command for positioning of the magnet is sent, in response to this command, the control unit 300 moves to a processing (S1623) of positioning of the magnet by a magnet fixed position setter 3440 of the rotation sensor unit.

This magnet positioning processing is described referring to Figs. 16A - 16B.

At the time of initial setting, as shown in Fig. 16A, the magnet 21 is temporarily fixed to the rotary shaft 13 at any arbitrary angular position (at the magnet origin position ($T_0$)).

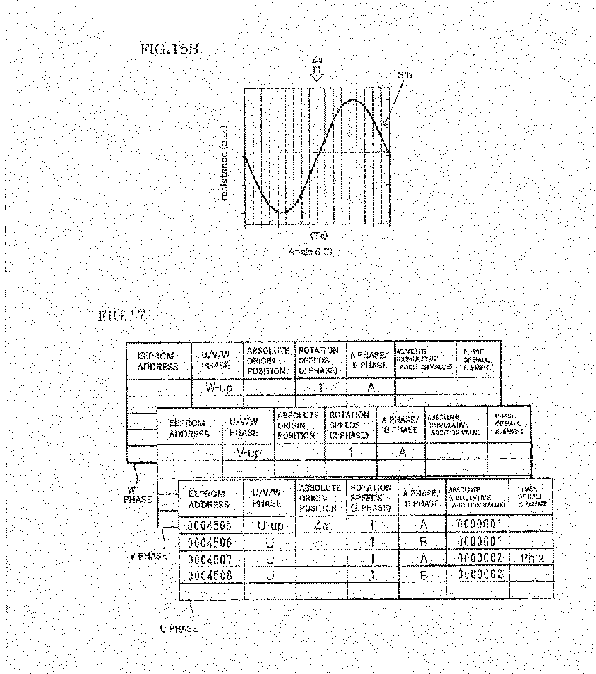

Next, where the rotary shaft 13 is fixed and when rotating the magnet 21 relatively to the rotary shaft 13, as shown in Fig.16B, the output of the MR sensor 20 changes with respect to the rotation angle as shown by the sinusoidal wave form, and a magnet origin position ($T_0$) signal is output.

Then, the magnet 21 is rotated to the rotary shaft 13, and a position where the output (the magnet origin position ($T_0$) signal) of then MR sensor coincides with the absolute origin position ($Z_0$) previously obtained is found, and the magnet 21 is fixed to the rotary shaft 13 in this position. Thus, the magnet 21 is fixed to the absolute origin position ($Z_0$) on the rotary shaft 13. Namely, as for the magnet 21, the origin position ($T_0$) of this magnet is fixed to the position on the rotary shaft 13 where is synchronized with the absolute origin position ($Z_0$).

Strictly, by the method of this embodiment, there is a possibility that it contains some error that positioning of the magnet 21 to the resolution (about 36000 pulses) of the MR sensor is assumed. It is defined that "absolute origin position" of the magnet 21 of the present invention includes such a minute error. Once this absolute origin position ($Z_0$) is set up between the magnet 21 and the rotary shaft, it is output as invariant position information with no repetitive error. Therefore, it is convenient in any way practically as information on "absolute origin position" for control of the brushless motor which performs servo control.

As an example of the position fixing method of the magnet 21 to the rotary shaft 13, the fixing member 2600 is fixed to the rotary shaft 13 with the lock-pin 2700 or adhesives, etc.

From the above information, the relation of the driving signal and the angle of the magnet on the rotary shaft is found, and the magnet can be relatively rotated to the rotary shaft. That is, the rising position Sn of each phase is corrected at the absolute origin position $Z_0$, and the provisional multiple-rotation absolute signal data are convert to multi-turn and absolute signal data, based on the absolute origin position (S1624). Thereby, it becomes possible to synchronize the driving signal and the output of the MR sensor completely.

Next, all the A/B phase signals obtained from the rotation sensor unit are related to the absolute position $Z_0$ of each phase signal and the Z phase signal, and "width of the Z phase", and is given the address of the EEPROM, so that it is converted into the multiple-rotation absolute signals that represent the absolute origin position of the rotary shaft 13 (S1625). That is, the provisional absolute data ($T_0$ basis) of each phase signal are corrected to the data of $Z_0$ basis, and the absolute data of multi rotation are generated. The absolute data of the MR sensor is also synchronized with the reference position $P_{h1Z}$ of the Hall element H1, based on the previously obtained information on the difference $\Delta\theta_0$ in the phase difference (mechanical angle).

Next, in the control unit 300, the absolute data of the multi rotation of $Z_0$ basis is recorded in the EEPROM 333 (S1626).

Fig. 17 is an example of the data recorded in the EEPROM about the phase data of A phase, B phase and Z phase related to each coil of U phase, V phase, and W phase.

For example, each data in Fig. 17 can be used as a table for current controller of each coil, that is a table giving absolute information etc. on the rotation speed, rotation angle or phase of each phase coil of A phase signal, B phase signal, Z phase and U phase, V phase, and W phase based on $Z_0$ basis. Each "width of the Z phase (1)" - "width of the Z phase (4)" (not shown) is used for generating various kinds of control signals of the brushless DC servo motor, such as an inverter driving signal. Further, the reference position $P_{h1Z}$ of the Hall element H1 is used for the synchronization determination processing, etc.

Sometimes, it is required to determine the absolute origin position $Z_0$, for performing highly accurate control as a drive source of the driven member. To meet such a demand, by a method as shown in Fig.4D, the origin position can also be determined based on dense positioning information or based on a combination of coarse and dense positioning information.

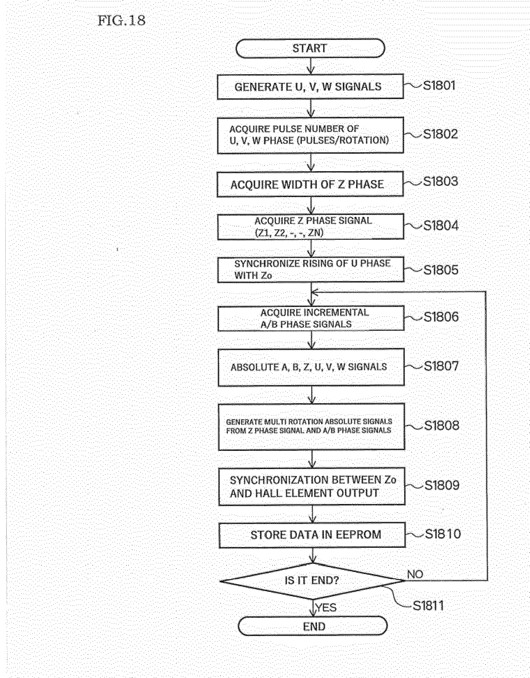

Fig. 18 is a flow chart showing the details of signal processing of a control unit at the time of the normal operation mode in the third embodiment.

In the normal operation mode, the control unit 300 of the brushless DC servo motor causes the brushless DC servo motor to function as a rotary encoder, by operating the multi rotation/absolute signal generator 3450, the normal operation mode motor control signal (iu, iv, iw) generator 3460, the normal operation mode DC servo controller 3470, the inverter driving signal generator 3480, etc. based on the external command and the information of the EEPROM 333 and the information from the rotation sensor unit 20.

Namely, at the normal operation mode motor control signal (iu, iv, iw) generator 3460, driving signals of U phase, V phase, W phase are generated (S1801), the number of pulses of the U phase, the V phase, and the W phase corresponding to the driving signal are acquired from the EEPROM 333 etc. (S1802), and further, data of a width of the Z phase signal and the Z phase signal (Z1, Z2, -, -, Zn) are acquired (S1803, S1804). The rising position of U phase is synchronized with the absolute origin position ($Z_0$) (S1805).

Next, acquire A/B phase signals from the rotation sensor unit via RAM (S1806), then based on incremental cumulative addition values of these signals, absolute each of those signals of the A/B phase signals, Z phase signal, signals of each phase of U, V, W per rotation by giving address of the EEPROM, and records those data in the RAM (S1807).

From the Z phase signal and the A/B phase signals, the absolute signals of multi rotation including information of the rotating speed and angle of rotation of the brushless DC servo motor are generated (S1808). Also, the absolute origin position ($Z_0$) is synchronized with the output of the Hall element (S1809). Those data are recorded in the EEPROM via the RAM (S1810).

That is, in accordance with the normal rotation and the reverse rotation of the rotary shaft of the brushless DC servo motor, each of the signals A, B, Z, U, V, W and the output of the Hall element is incremented or decremented every time the rotator shaft of the motor rotates, and the information are sequentially recorded in the EEPROM via the RAM as information representing the current position of the rotary shaft of the brushless DC servo motor.

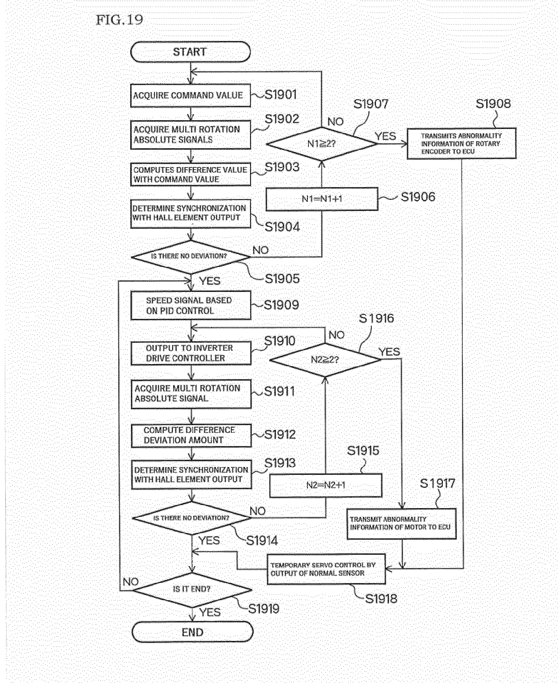

Next, operation of the DC servo control unit 3470 and the inverter driving signal generator 3480 in the normal operation mode is described referring to Fig. 8 and Fig. 19.

In the normal operation mode, when the brushless DC servo motor 100 rotates, the control unit 300 of the brushless DC servo motor generates a sine-wave driving signal for driving the inverter for each of the coils of U phase, V phase, and W phase, by recognizing the rotation speed and rotation direction and the absolute origin position of the brushless DC servo motor based on the A/B phase signals from the rotation sensor unit 20 and comparing the recognized rotation speed and rotation direction and absolute origin position with the command Value.

That is, according to angle of rotation of the rotor, the voltage of the coil of the stator is continuously changed to sine wave shape, and the rotor is rotated. The electric power of the sine voltage which shifted a 120-degree (electrical angle) phase is input into each coil of U phase, V phase, and W phase. To the inverter as the drive circuit of the motor, the duty ratio of a PWM signal is controlled and voltage is changed continuously.

Usually, the DC servo control unit 3470 in the normal operation mode, recognizes the current rotation angle of the rotary shaft 13 of the brushless DC servo motor 100, and hence the current absolute position of the driven member 50, based on the signal of the rotating speed, the angle of rotation, and absolute multi rotation signal which are recorded in the EEPROM in the form of a table shown Fig. 17, etc. The DC servo control unit 3470 calculates the speed commanding value from the current position of the driven component 50 to a target position, etc. based on the information. The inverter driving signal generator 3480 generates the inverter driving signal for controlling rotation of brushless DC servo motor 100 in response to the output of the DC servo control unit 3470, and outputs it to the inverter drive controller 410.

Fig. 19 is a flow chart which shows the details of operation of the DC servo control unit 3470 and the inverter driving signal generator 3480, in the normal operation mode.

In the normal operation mode, the DC servo control unit 3470 acquires the position and target speed of each target based on the operating pattern of the brushless DC servo motor set up preliminarily, from the memories 330, such as RAM, as a command value (S1901). In the memory, motor driving signals on the assumption of sine wave drive or PID control, for example, data of PWM control signals are stored. Those data are, for example, data as a target speed corresponding to the operation pattern of the brushless DC servo motor set corresponding to each target position of the driven member.

As an example of the operation pattern including the position of each target, the brushless DC servo motor is driven with an acceleration region from the inversion position of the driven member to the end position of acceleration, a constant speed region from the end position of acceleration to the start position of braking, and a deceleration region from the start position of braking to the reversal position. According to such a predetermined operating pattern, the PWM control of the brushless DC servo motor is carried out.

For example, the inverter driving signal generator 3480 acquires signal of the absolute multi rotation (S1902), then computes a difference value with a command value (S1903). The sensor error determination processing unit 3510 performs synchronization determination between the MR sensor output and the Hall element output (S1904). In the determination of the presence or absence of "deviation" (S1905), if the difference value exceeds the allowable value, it is determined that there is "deviation".

In the synchronization determination, the information of the actual phase difference (mechanical angle) $\Delta\theta$ obtained based on the output of the rotation sensor unit 20 is compared with the information of the phase difference (mechanical angle) $\Delta\theta_0$ previously recorded in the EEPROM for determination. If there is no difference between the values of the MR sensor output and the Hall element output, it is determined that they are synchronized, and if there is a substantial difference, it is determined that they are out of synchronization.

Based on these results, the sensor error determination processing unit 3510 determines that if it is judged that there are differences twice (S1906, S1907), it is determined that the rotary encoder (rotation sensor unit 20) has an error including the deviation and transmits abnormality information to the ECU 500 (S1908). When the EEPROM itself instead of the rotation sensor unit 20 has abnormalities, it can check at this time.

When there is "no deviation" by the judgment of the deviation (S1905), the inverter driving signal based on PID control is generated (S1909), and the driving signal is output to the inverter drive controller 410 (S1910). Then, the multi rotation and the absolute signal based on A/B phase signals from the rotation sensor unit 20 are acquired (S1911), and the difference deviation amount of the inverter driving signal, and the absolute multi rotation signal is computed (S1912). Further, synchronism of the MR sensor output and the Hall elements output is determined by the sensor error decision processing unit 3510 (S1913).

Next, the existence of the deviation in the PID control is determined (S1914). If difference deviation amount exceeds an acceptable value continuously twice (S1915, S1916), it is judged that the brushless DC servo motor being unusual, and the abnormality information of the brushless DC servo motor is transmitted to ECU 500 (S1917). And servo control is continued with the output of a normal sensor (S1918). When there is "no deviation " by the judgment of difference deviation amount (S1914), a new inverter driving signal is generated (S1909), hereafter, the same process is repeated, and operation is ended by the judgment (S1919) of an end.

Thus, the brushless DC servo motor of this embodiment is a servo motor controlled using the output signal of the single MR sensor 20 which functions as a rotary encoder.

According to this embodiment of the present invention, since position information with relatively high precision is generated by using output signals of inexpensive Hall elements, so that it is possible to provide a control device for a DC motor which can be inexpensive and highly reliable. Further, even when the MR sensor fails, the position information with relatively high precision can be generated, so that it is possible to provide a control device for a DC motor which is inexpensive and highly reliable.

[4th embodiment]

Next, the 4th embodiment of the present invention is described.

In the 4th embodiment, in the same manner as the third embodiment, after determining the absolute origin position of the rotary shaft and formally fixing the magnet to the rotary shaft, the width of the Z phase is determined with respect to the signals relating to the U, V, W phase coils.

Namely, in the third embodiment, before fixing the magnet at the absolute origin position of the rotary shaft, the width of the Z phase is determined with respect to the signals relating to the U, V, W phase coils. Instead, in this embodiment, after fixing the magnet at the absolute origin position of the rotary shaft, the width of the Z phase is determined with respect to the signals relating to the U, V, W phase coils, and a table of absolute data is generated and recorded in the EEPROM. The effect acquired is the same as the third embodiment of the present invention.

[Embodiment 5]

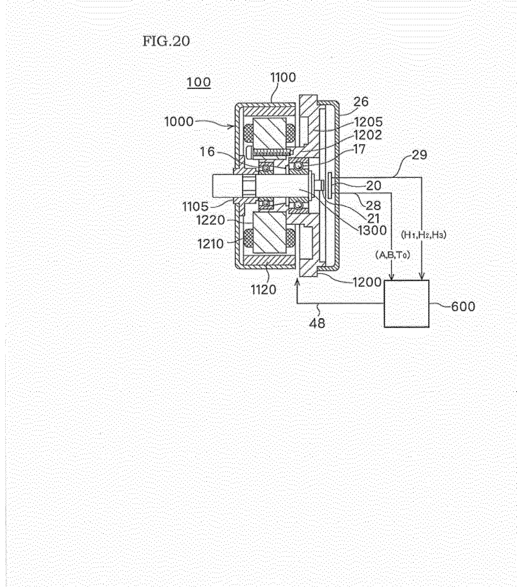

Next, the fifth Embodiment which applied the present invention to a brushless DC servo motor of an outer rotor type is described. Fig.20 is a functional block diagram showing the configuration example of the control device of the brushless DC servo motor according to the fifth Embodiment.

The brushless DC servo motor 100 of this embodiment comprises an outer type rotor 1000 and a stator 1200 which rotatably supports the rotor 1000. The rotor 1000 comprises a rotary shaft 1300, a cup-shaped cover of rotor 1100 having a bottom in which the rotary shaft 1300 is fixed to, and a magnet 1120 of plural poles arranged along the inner peripheral surface of a tubed part of the cover of rotor 1100.

On the other hand, the stator 1200 comprises a support member 1205 rotatably supporting the rotary shaft 1300 via a pair of bearings 16 and 17, a stator core 1220, and a stator coil 1210 wound around the stator core 1220. The stator core 1220 is fixed to a tubed part 1202 of the support member 1205 with a screw etc. inside the magnet 1120 of the rotor 1000 via a radial gap. The end cover 26 is fixed to the support member 1205 from the outside. On one end of the rotary shaft 1300 and on the end cover 26, a rotation sensor unit 20 which outputs an incremental signal accompanying the rotation of the rotary shaft 1300 is provided.

The rotation sensor unit 20 comprises a magnet 21, a pair of MR sensors, and three Hall elements. The magnet is a flat plate-shaped magnet fixed to one end face of the rotary shaft 1300. The pair of MR sensors is arranged to face the magnet 21 in the axial direction of the rotary shaft (refer to Figs. 9A and 9C).

The analog signals of the pair of MR sensors detected by the rotation sensor unit 20 are converted into digital signals, and pulse data (A, B) of incremental A/B phase signals and positioning signal T0 are transmitted to a control unit mounted on a printed circuit board 600 via a communication cable 28. The analog signal of the Hall elements of the rotation sensor unit 20 is also transmitted to the control unit mounted on the printed circuit board 600 via a communication cable 29.

In the control unit, processing similar to that described in the third embodiment is executed based on the data of the rotation sensor unit 20, etc. The position of the magnet 21 with respect to the rotary shaft 1300 is also changed and fixed to the absolute origin position ($Z_0$) which corresponds to the absolute origin position ($Z_0$), from the temporary fixed position at any arbitrary angular position (magnet origin position ($T_0$)).

According to this embodiment of the present invention, since position information with relatively high precision is generated by using output signals of inexpensive Hall elements, so that it is possible to provide a control device for a DC motor which can be inexpensive and highly reliable. Further, even when the MR sensor fails, the position information with relatively high precision can be generated, so that it is possible to provide a control device for a DC motor which is inexpensive and highly reliable.

**Claims**

1. A control device for a DC motor comprising:

   a control unit (300, 40, 41) adapted to generate and output a drive signal for the DC motor (100); and
   a rotation sensor unit (20) adapted to detect rotation of a rotary shaft of the DC motor,
   wherein the control device generates drive signal of the DC motor and controls electric power supplied to an armature fixed to the rotary shaft via a brush,
   wherein the rotation sensor unit (20) comprises:

      a flat magnet (21) secured to one end of the rotary shaft;
      a pair of MR sensors (22) and at least three Hall elements (27), which are fixed to a stator side of the DC motor at a position facing the flat magnet in the axial direction of the rotary shaft; and
      a processing circuit unit (23),
      wherein the rotation sensor unit generates and outputs incremental A/B phase signals accompanying the rotation of the rotary shaft, generates positioning information indicating a state in which the A phase and B phase output signals are in a specific relationship, based on output of the pair of MR sensors (22), and outputs information of rotation angle of the rotary shaft based on output of the Hall elements (27),
      wherein the control unit (300, 40, 41) is configured to:

         start and drive the DC motor (100) in both forward and reverse directions at a predetermined number of revolutions by an initialization drive signal;
         acquire information on a absolute origin position ($Z\alpha$) of the MR sensor with respect to the rotary shaft, from synchronization relationship between A phase signal or B phase signal output from the rotation sensor unit, the positioning information, and the initialization drive signal, wherein the output of A phase signal or B phase signal is obtained by driving the DC motor;
         generate synchronization determination information based on the phase difference between the absolute origin position and the information on the rotation angle;
         convert all data of the information on the A phase or the B phase, the absolute origin position, and the synchronization determination information into data on absolute signal; and
         store those data in a rewritable nonvolatile memory.

2. A control device for a brushless DC servo motor, comprising:

   a control unit (300, 400, 410) adapted to generate and output a drive signal and control electric power supplied to each of three phase stator coils of U phase, V phase, W phase of the brushless DC servo motor; and
   a rotation sensor unit (20) adapted to detect rotation of a rotor of the brushless DC servo motor having a multipolar permanent magnet,
   wherein the rotation sensor unit comprises:

      a flat magnet (21) secured to one end of the rotary shaft of the rotor;
      a pair of MR sensors (22) and at least three Hall elements (27), which are fixed to a stator side of the brushless DC servomotor at a position facing the flat magnet in the axial direction of the rotary shaft; and
      a processing circuit unit (300),
      wherein the processing circuit unit sets a position on a boundary line between the N pole region and the S pole region of the flat magnet as an magnet origin position, generates signals of phase A and phase B in accordance with the rotation of the rotary shaft based on the outputs of the pair of MR sensors, outputs information on the magnet origin position, and outputs information of rotation angle of the rotary shaft based on output of the Hall elements,

wherein the control unit comprises:

a unit adapted to generate each phase information of the U phase, the V phase, the W phase each of which synchronized with a rising phase of the output signal of the A phase or the B phase of the rotation sensor unit according to the number of poles of the rotor;

a unit adapted to obtain an absolute origin position of the rotary shaft with respect to the driving signal based on the synchronization relationship of: a driving signal rising phase at which one of the three phase stator coils rises from zero; an integrated value peak phase of counter electromotive force to the one-phase stator coil obtained by driving the motor; and a rising phase of the output signal of the A phase or the B phase from the rotation sensor unit corresponding to zero of the driving signal;

a unit adapted to set a plurality of Z phase signals at 360 degrees interval synchronized with the rising of the A phase or B phase output signal corresponding to zero driving signal; and

a unit adapted to generate synchronization determination information based on the phase difference between the absolute origin position and the information on the rotation angle;

wherein the flat magnet is fixed at a position where the magnet origin position is synchronized with the absolute origin position of the rotary shaft, and

wherein the control device is configured to drive the motor using the rotation sensor unit as a rotary encoder of the U-phase, V-phase, and W-phase.

3. The control device for the brushless DC servo motor according to claim 2, wherein the control unit further comprises:

a unit adapted to generate a plurality of width of Z phase signals in synchronization with the rising position of the first A phase signal or the falling of the A phase signal of each of the Z phase signals and each signal having a width corresponding to one to several pulses of the A phase signal;

a unit adapted to generate data of the provisional multiple-rotation absolute signal by giving addresses of a rewritable nonvolatile memory to information of each of phase signals of A phase, B phase, Z phase, the width of Z phase, and phases of the U, V, and W with reference to the magnet origin position, and generates as data of the provisional multiple-rotation absolute signals; and

a unit adapted to convert the data of the provisional multiple-rotation absolute signal into data of multiple-rotation absolute signal with reference to the absolute origin position of the rotary shaft and recording the data in the rewritable nonvolatile memory,

wherein the control unit is configured to drive the motor using the data of the rewritable nonvolatile memory.

4. A DC motor via a brush which electric power is supplied to amateur fixed to a rotary shaft via the brush, and rotatable in forward and reverse both directions,

wherein the DC motor comprises the rotation sensor unit and the control device according to claim 1, determines synchronism based on the information on the rotation angle the synchronization determination information, and determines failure of the rotation sensor unit, and

when it is determined that the MR sensor has failed, the electric power supplied to the armature is controlled based on the output of the Hall elements.

5. The brushless DC servo motor comprises the rotation sensor unit and the control device according to claim 2, determines synchronism based on the information on the rotation angle the synchronization determination information, and determines failure of the rotation sensor unit, and

when it is determined that the MR sensor has failed, the electric power supplied to the stator coil is controlled based on the output of the Hall elements.

**Patentansprüche**

1. Steuervorrichtung für einen Gleichstrommotor, Folgendes umfassend:

eine Steuereinheit (300, 40, 41), die dafür eingerichtet ist, ein Antriebssignal für den Gleichstrommotor (100) zu erzeugen und auszugeben,

eine Rotationssensoreinheit (20), die dafür eingerichtet ist, die Rotation einer Rotationswelle des Gleichstrommotors zu erkennen,

wobei die Steuervorrichtung das Antriebssignal des Gleichstrommotors erzeugt und die elektrische Leistung steuert, die mittels einer Bürste einem Anker zugeführt wird, der an der Rotationswelle befestigt ist,

wobei die Rotationssensoreinheit (20) Folgendes umfasst:

einen Flachmagneten (21), der an einem Ende der Rotationswelle gesichert ist,

ein Paar MR-Sensoren (22) und mindestens drei Hall-Elemente (27), die an einer Statorseite des Gleichstrommotors an einer Position befestigt sind, die dem Flachmagneten in der axialen Richtung der Rotationswelle zugewandt ist, und

eine Verarbeitungsschaltungseinheit (23),

wobei die Rotationssensoreinheit inkrementelle A/B-Phasensignale erzeugt und ausgibt, welche die Rotation der Rotationswelle begleiten, basierend auf der Ausgabe des Paares MR-Sensoren (22) Positionierungsinformationen erzeugt, die einen Zustand angeben, in dem die A-Phase- und die B-Phase-Ausgabesignale in einer speziellen Beziehung stehen, und basierend auf der Ausgabe der Hall-Elemente (27) Informationen des Rotationswinkels der Rotationswelle ausgibt,

wobei die Steuereinheit (300, 40, 41) für Folgendes konfiguriert ist:

Starten und Antreiben des Gleichstrommotors (100) in sowohl der Vorwärtsals auch der Rückwärtsrichtung mit einer festgelegten Anzahl von Umdrehungen durch ein Initialisierungsantriebssignal,

Erfassen von Informationen zu einer absoluten Ausgangsposition ($Z\alpha$) des MR-Sensors in Bezug auf die Rotationswelle aus einer Synchronisationsbeziehung zwischen der A-Phasensignal- oder der B-Phasensignalausgabe von der Rotationssensoreinheit, den Positionierungsinformationen und dem Initialisierungsantriebssignal, wobei das A-Phasensignal oder das B-Phasensignal durch Antreiben des Gleichstrommotors erzielt wird,

Erzeugen von Synchronisationsbestimmungsinformationen basierend auf der Phasendifferenz zwischen der absoluten Ausgangsposition und den Informationen zum Rotationswinkel,

Umwandeln aller Daten der Informationen zur A-Phase oder zur B-Phase, der absoluten Ausgangsposition und der Synchronisationsbestimmungsinformationen in Daten zum absoluten Signal und Speichern dieser Daten in einem überschreibbaren nicht-flüchtigen Speicher.

2. Steuervorrichtung für einen bürstenlosen Gleichstromservomotor, Folgendes umfassend:

eine Steuereinheit (300, 400, 410), die dafür eingerichtet ist, ein Antriebssignal zu erzeugen und auszugeben und die elektrische Leistung zu steuern, die jeder von Drei-Phasen-Statorspulen von U-Phase, V-Phase, W-Phase des bürstenlosen Gleichstromservomotors zugeführt wird, und

eine Rotationssensoreinheit (20), die dafür eingerichtet ist, die Rotation eines Rotors des bürstenlosen Gleichstromservomotors zu erkennen, der einen mehrpoligen Dauermagneten aufweist,

wobei die Rotationssensoreinheit Folgendes umfasst:

einen Flachmagneten (21), der an einem Ende der Rotationswelle des Rotors gesichert ist,

ein Paar MR-Sensoren (22) und mindestens drei Hall-Elemente (27), die an einer Statorseite des bürstenlosen Gleichstromservomotors an einer Position befestigt sind, die dem Flachmagneten in der axialen Richtung der Rotationswelle zugewandt ist, und

eine Verarbeitungsschaltungseinheit (300),

wobei die Verarbeitungseinheit eine Position auf einer Grenzlinie zwischen der N-Polregion und der S-Polregion des Flachmagneten als Magnetausgangsposition einstellt, gemäß der Rotation der Rotationswelle basierend auf den Ausgaben des Paares MR-Sensoren Signale von A-Phase und B-Phase erzeugt, Informationen zur Magnetausgangsposition ausgibt und basierend auf der Ausgabe der Hall-Elemente Informationen des Rotationswinkels der Rotationswelle ausgibt,

wobei die Steuereinheit Folgendes umfasst:

eine Einheit, die dafür eingerichtet ist, jede Phaseninformation der U-Phase, der V-Phase, der W-Phase zu erzeugen, die jeweils mit einer ansteigenden Phase des Ausgabesignals der A-Phase oder der B-Phase der Rotationssensoreinheit gemäß der Anzahl von Polen des Rotors synchronisiert ist,

eine Einheit, die dafür eingerichtet ist, eine absolute Ausgangsposition der Rotationswelle in Bezug auf ein Antriebssignal, basierend auf der Synchronisationsbeziehung von Folgendem zu gewinnen: eine ansteigende Antriebssignalphase, bei der ein der Drei-Phasen-Statorspulen von null ansteigt, eine Integrierter-Wert-Spitzenphase der elektromotorischen Gegenkraft zu der Ein-Phasen-Statorspule, die durch Antreiben des Motors gewonnen wird, und einer ansteigenden Phase des Ausgabesignals der A-Phase oder der B-Phase von der Rotationssensoreinheit, die null des Antriebssignals entspricht,

eine Einheit, die dafür eingerichtet ist, mehrere Z-Phasensignale in 360°-Intervallen einzustellen, die mit dem Anstieg des A-Phasen- oder B-Phasenausgabesignals, das dem Antriebssignal von null entspricht, synchronisiert sind, und

eine Einheit, die dafür eingerichtet ist, basierend auf der Phasendifferenz zwischen der absoluten Ausgangsposition und den Informationen zum Rotationswinkelt Synchronisationsbestimmungsinformationen zu erzeugen,

wobei der Flachmagnet an einer Position befestigt ist, an der die Magnetausgangsposition mit der absoluten Ausgangsposition der Rotationswelle synchronisiert ist, und

wobei die Steuervorrichtung dafür konfiguriert ist, den Motor mit Hilfe der Rotationssensoreinheit als einem Drehgeber der U-Phase, V-Phase und W-Phase anzutreiben.

3. Steuervorrichtung für den bürstenlosen Gleichstromservomotor nach Anspruch 2, wobei die Steuereinheit ferner Folgendes umfasst:

eine Einheit, die dafür eingerichtet ist, mehrere Weiten von Z-Phasensignalen in Synchronisation mit der ansteigenden Position des ersten A-Phasensignals oder dem Fallen des A-Phasensignals von jedem der Z-Phasensignale und jedem Signal zu erzeugen, das eine Weite aufweist, die einem bis mehreren Impulsen des A-Phasensignals entspricht,

eine Einheit, die dafür eingerichtet ist, Daten des vorläufigen, absoluten Mehrfachrotationssignals zu erzeugen, indem Informationen zu jedem von Phasensignalen von A-Phasen, B-Phase, Z-Phase, der Weite der Z-Phasen und Phasen von U, V, W in Bezug auf die Magnetausgangsposition Adressen eines überschreibbaren nicht-flüchtigen Speichers gegeben werden und als Daten der vorläufigen absoluten Mehrfachrotationssignale erzeugt, und

eine Einheit, die dafür eingerichtet ist, die Daten des vorläufigen, absoluten Mehrfachrotationssignals in Daten des absoluten Mehrfachrotationssignals in Bezug auf die absolute Ausgangsposition der Rotationswelle umzuwandeln und die Daten in dem überschreibbaren nicht-flüchtigen Speicher aufzuzeichnen,

wobei die Steuereinheit dafür konfiguriert ist, den Motor mit Hilfe der Daten des überschreibbaren nicht-flüchtigen Speichers anzutreiben.

4. Gleichstrommotor, bei dem mittels einer Bürste einem Anker, der an einer Rotationswelle befestigt ist, elektrische Leistung zugeführt wird und der sowohl in der Vorwärts- als auch der Rückwärtsrichtung drehbar ist,

wobei der Gleichstrommotor die Rotationssteuereinheit und die Steuereinheit nach Anspruch 1 umfasst, Synchronismus basierend auf den Informationen zum Rotationswinkel den Synchronisationsbestimmungsinformationen bestimmt und einen Ausfall der Rotationssensoreinheit bestimmt und

wenn bestimmt wird, dass der MR-Sensor ausgefallen ist, die elektrische Leistung, die dem Anker zugeführt wird, basierend auf der Ausgabe der Hall-Elemente gesteuert wird.

5. Bürstenloser Gleichstrommotor umfasst die Rotationssensoreinheit und die Steuereinheit nach Anspruch 2,

bestimmt Synchronismus basierend auf den Informationen zum Rotationswinkel den Synchronisationsbestimmungsinformationen und bestimmt einen Ausfall der Rotationssensoreinheit und

wenn bestimmt wird, dass der MR-Sensor ausgefallen ist, wird die elektrische Leistung, die der Statorspule zugeführt wird, basierend auf der Ausgabe der Hall-Elemente gesteuert.

**Revendications**

1. Dispositif de commande d'un moteur à courant continu, comprenant :

une unité de commande (300, 40, 41) destinée à produire et à émettre un signal d'entraînement pour le moteur en courant continu (100);
une unité formant capteur de rotation (20) conçu pour détecter la rotation d'un arbre rotatif du moteur en courant continu;

dans lequel le dispositif de commande produit le signal d'entraînement du moteur en courant continu et contrôle la puissance électrique à l'aide d'un balai vers une induit fixée à l'arbre rotatif;

dans lequel l'unité formant capteur de rotation (20) comprend:

un aimant plat (21) qui est fixé à l'extrémité de l'arbre rotatif,
une paire de capteurs MR (22) et au moins trois éléments Hall (27) fixés sur un côté stator du moteur en courant continu à une position tournée vers l'aimant plat dans la direction axiale de l'arbre rotatif; et
une unité formant circuit de traitement (23);
dans lequel l'unité formant capteurs rotatif produit et émet des signaux de phase A/B incrémentaux, qui accompagnent la rotation de l'arbre rotatif, qui génère des informations de positionnement indiquant un état dans lequel les signaux de sortie de phase A et de sortie de phase B sont dans une relation spécifique, en fonction de la sortie de la paire de capteurs MR (22), et fournit en sortie des informations concernant l'angle de rotation de l'arbre rotatif en fonction de la sortie des éléments Hall (27),
dans lequel l'unité de commande (300, 40, 41) est configurée pour:

démarrer et entraîner le moteur à courant continu (100) dans les directions à la fois vers l'avant et vers l'arrière, avec un nombre déterminé de tours par un signal d'initialisation d'entraînement,
collecter les informations relatives à une position d'origine absolue (Za) du capteur MR en ce qui concerne l'arbre rotatif, d'une relation de synchronisation entre la sortie du signal de phase A ou la sortie de signal de phase B de l'unité formant capteur de rotation, des informations de positionnement et du signal d'initialisation d'entraînement, le signal de phase A ou le signal de phase B étant obtenu par l'entraînement du moteur à courant continu;
générer des informations de détermination de la synchronisation en fonction de la différence de phase entre la position d'origine absolue et les informations relatives à l'angle de rotation,
convertir toutes les données des informations relatives à la phase A ou à la phase B, à la position d'origine absolue et aux informations de détermination de la synchronisation en données de signaux absolus; et
stocker ces données dans une mémoire non-volatile réinscriptible.

**2.** Dispositif de commande d'un moteur à courant continu sans balais, comprenant :

un dispositif de commande (300, 400, 410) conçu pour produire et émettre un signal d'entraînement et contrôler la puissance électrique de chaque bobine à trois phases de la phase U, de la phase V, de la phase W du moteur à courant continu sans balai; et
une unité formant capteur de rotation (20) conçue pour détecter la rotation d'un rotor du moteur servo en courant continu sans balais, qui présente un aimant permanent multipôle;
dans lequel l'unité formant capteur rotative comprend:

un aimant plat (21) qui est attaché à l'extrémité de l'arbre rotatif du rotor;
une paire de capteurs MR (22) et au moins trois éléments Hall (27) fixés à une position orientée vers l'aimant plat dans la direction axiale de l'arbre rotatif sur un côté stator du servomoteur à courant continu sans balais; et
une unité formant circuit de traitement (300);
dans lequel l'unité formant unité de traitement fixe une position sur une ligne de frontière entre la région du pôle N et la région du pôle S de l'aimant plat en tant que position de sortie magnétique, génère des signaux de phase A ou de phase B selon la rotation de l'arbre rotatif en fonction des sorties de la paire de capteurs MR, émettant des informations sur la position d'origine de l'aimant et émet des informations sur l'angle de rotation de l'arbre rotatif en fonction de la sortie des éléments Hall,
dans lequel l'unité de commande comprend:

une unité destinée à produire chaque information de phase de la phase U, de la phase V, de la phase W, chacune étant synchronisée avec une phase ascendante du signal de sortie de la phase A ou de la phase B de l'unité formant capteur de rotation en fonction du nombre de pôles du rotor;
une unité adaptée pour obtenir une position d'origine absolue de l'arbre rotatif par rapport à un signal d'entraînement basé sur la relation de synchronisation: d'une phase ascendante de signal d'entraînement au cours de laquelle l'une des bobines de stator à trois phases augmente de zéro, une phase de crête de la contre-force électromotrice intégrée à la bobine de stator monophasée obtenue par l'entraînement du moteur et une phase ascendante du signal de sortie de la phase A soit la phase B de l'unité formant capteur rotative correspondant à zéro du signal d'entraînement ;

un dispositif conçu pour régler plusieurs signaux de phase Z à intervalles de 360°, synchronisés avec l'augmentation du signal de sortie de phase A ou du signal de sortie de phase B correspondant au signal d'entraînement de zéro; et

une unité créée pour produire des informations de synchronisation en fonction de la différence de phase entre la position d'origine absolue et les informations relatives à l'angle de rotation;

dans lequel l'aimant plat est fixé à une position où la position d'origine de l'aimant est synchronisée avec la position d'origine absolue de l'arbre rotatif; et

le dispositif de commande est configuré pour entraîner le moteur à l'aide de l'unité formant capteur de rotation en tant que codeur rotatif de la phase U, de la phase V et de la phase W.

3. Dispositif de commande du moteur sans balais en courant continu conformément à la revendication 2, dans lequel l'unité de commande comprend également:

un dispositif conçu pour générer une pluralité de largeurs de signaux de phase Z en synchronisation avec la position ascendante du premier signal de phase A ou la descente du signal de phase A de chacun des signaux de phase Z et de tout signal présentant une largeur correspondant à une ou plusieurs impulsions du signal de phase A;

une unité qui est chargée de produire des données provisoires du signal de rotation multiple absolu en fournissant des informations à une mémoire non-volatile réinscriptible sur chacun des signaux de phase de phase A, de phase B, de phase Z, de la largeur de la phase Z et des phases U, V, W par rapport à la position d'origine de l'aimant, et pour générer, en tant que données, des signaux absolus multi-rotation provisoires; et

une unité chargée de convertir les données du signal de rotation multiple provisoire et absolue en données du signal de rotation multiple absolu par rapport à la position d'origine absolue de l'arbre rotatif et d'enregistrer les données dans la mémoire non volatile réinscriptible,

dans lequel l'unité de commande est configurée pour entrainer le moteur à l'aide des données de la mémoire non volatile réinscriptible.

4. Moteur à courant continu dans lequel l'énergie électrique est fournie, au moyen d'un balai à un induit fixé à un arbre rotatif qui peut tourner à la fois dans le sens avant et dans le sens inverse,

dans lequel le moteur à courant continu comprend l'unité formant capteur de rotation et l'unité de commande selon la revendication 1, détermine la synchronisation sur la base des informations relatives à l'angle de rotation, les informations de détermination de synchronisation et détermine une défaillance de l'unité formant capteur de rotation; et

dans le cas où il est déterminé que le capteur MR est défaillant, l'énergie électrique fournie à l'induit est réglée, sur la base de la sortie des éléments Hall.

5. Le moteur en courant continu sans balai qui comprend l'unité formant capteur de rotation et l'unité de commande selon la revendication 2,

détermine la synchronisation sur la base des informations relatives à l'angle de rotation et détermine une défaillance de l'unité formant capteur de rotation, et

dans le cas où il est déterminé que le capteur MR est défaillant l'énergie électrique qui est fournie à la bobine du stator est réglée sur la base de la sortie des éléments Hall.

FIG.1

EP 3 503 379 B1

31

EP 3 503 379 B1

FIG.2A

FIG.2B

FIG.2C

FIG.2D

Cos                    Sin

resistance (a.u.)

0  40  80  120 160 200 240 280 320 360
Angle θ ( )

ARC TANGENT
ARITHMETIC
PROCESSING

measured angle ( )
350
300
250
200
150
100
50
0
0  40  80  120 160 200 240 280 320 360
Angle θ ( )=360

FIG.2E

23        20

22A

| FIRST MR SENSOR | → | A/D CONVERTER 231 | ARC TANGENT ARITHMETIC PROCESSING UNIT 234 | POSITIONING INFORMATION GENERATOR 237 |

| SECOND MR SENSOR | → | SHAFT DEVIATION CORRECTION PROCESSING UNIT 232 | PULSE COUNTER 235 | PARALLEL/SERIAL CONVERTER 238 |

22B

| TEMPERATURE SENSOR | → | MEMORY 233 | INCREMENTAL A/B PHASE SIGNALS GENERATOR | SERIAL COMMUNICATION SECTION 236 239 |

22C

33

FIG.2F

HALL ELEMENT OUTPUT

```
         0    60   120  180  240  300  360

H₁  ─────╮                    ╭─────────
              ╲_____╱  ⌐Ph₁

H₂  ─────────╮        ╭──────────────
                 ╲____╱            ⌐Ph₂

H₃  ─────────────╮    ╭──────────────
               ⌐Ph₃ ╲_╱
```

1200 PULSES

FIG.3A

```
              ┌──────────────┐
              │    START     │
              └──────┬───────┘
                     │
                     ▼
        ╱╲                      NO          S302
      ╱  WHETHER SELF-INITIALIZATION ╲────────────┐
      ╲  SETTING IS COMPLETED?      ╱       ┌──────────────────────┐
        ╲╱                          │       │  SELF-INITIALIZATION │
    S301    │ YES                   └──────▶│  PROCESSING MODE     │
                                            └──────────┬───────────┘
              ┌──────────────────────┐                 │
              │  READ DATA OF EEPROM  │◀───────────────┘── S303
              └──────────┬───────────┘
                         ▼
              ┌──────────────────────────┐
              │  READ DATA OF HALL ELEMENT │── S304        S306
              └──────────┬───────────────┘                 │
                         │             ┌──────────────────────┐
    S305                 │             │  TRANSMIT ERROR      │
                         │             │  INFORMATION TO ECU  │
        ╱╲               │             └──────────────────────┘
      ╱    ╲   YES                          ▲
     ╱ ABNORMAL ╲───────────────────────────┘
     ╲ TERMINATION? ╱
       ╲    ╱
        ╲╱
         │ NO
         ▼
  ┌──────────────────────┐
  │  NORMAL OPERATION    │── S307
  │  PROCESSING MODE     │
  └──────────┬───────────┘
             ▼
      ┌──────────────┐
      │     END      │
      └──────────────┘
```

FIG.3B

```
          ┌──────────────┐
          │    START     │
          └──────┬───────┘
                 ↓
      ┌─────────────────────┐
      │ INITIALIZE EEPROM DATA │ ～S311
      └──────────┬──────────┘
                 ↓←─────────────────────────┐  S315
      ┌─────────────────────┐    ┌──────────────────────────┐
S312～│ OUTPUT PWM DRIVING SIGNAL │    │ CORRECT MR SENSOR OUTPUT │
      │   (± N ROTATION)    │    │ BASED ON DIFFERENCE      │
      └──────────┬──────────┘    │ BETWEEN PWM DRIVING SIGNAL│
                 ↓               │ AND A/B PHASE SIGNAL     │
      ┌─────────────────────┐    └──────────────────────────┘
S313～│ OBTAIN A/B PHASE SIGNAL │                  ↑
      │   (± N ROTATION)    │                  │
      └──────────┬──────────┘                  │
                 ↓                             │
           ◇───────────◇   NO                  │
          〈  NORMAL?   〉────────────────────────┘
           ◇───────────◇
    S314     │ YES
             ↓
      ┌─────────────────────┐
      │ CONVERT A/B-PHASE SIGNALS │ ～ S316
      │ TO PROVISIONAL ABSOLUTE VALUES│
      │ (ADDRESSING)        │
      └──────────┬──────────┘
                 ↓
      ┌─────────────────────┐
      │ RECORD PROVISIONAL  │ ～S317
      │ ABSOLUTE VALUES IN EEPROM│
      └──────────┬──────────┘
                 ↓
      ┌─────────────────────┐
      │ EXTRACT ABSOLUTE ORIGIN POSITION│ ～S318
      │ Zα OF MR SENSOR     │
      └──────────┬──────────┘
                 ↓
      ┌─────────────────────┐
      │ SYNCHRONIZATION BETWEEN Zα│ ～S319
      │ AND HALL ELEMENT OUTPUT│
      └──────────┬──────────┘
                 ↓
      ┌─────────────────────┐
      │ SET UP WIDTH OF Z PHASE SIGNAL│ ～S320
      │ SYNCHRONIZED WITH RISING OF│
      │ PHASE SIGNAL A OR B │
      └──────────┬──────────┘
                 ↓
      ┌─────────────────────┐
      │ CONVERT ALL OF A,B, Z PHASE DATA│ ～S321
      │ TO ABSOLUTE DATA    │
      └──────────┬──────────┘
                 ↓
      ┌─────────────────────┐
      │ RECORD ALL OF A,B, Z PHASE DATA│ ～S322
      │ IN EEPROM           │
      └──────────┬──────────┘
                 ↓
          ┌──────────────┐
          │     END      │
          └──────────────┘
```

FIG.4A

FIG.4B

(+N ROTATION)

A PHASE

B PHASE

(CW)

WIDTH (1) OF Z PHASE

(360 DEGREES)

WIDTH (2) OF Z PHASE

ROTATION ANGLE(To BASIS)

FIG.4C

(-N ROTATION)

A PHASE

B PHASE

(CCW)

WIDTH (3) OF Z PHASE

(360 DEGREES)

WIDTH (4) OF Z PHASE

ROTATION ANGLE(To BASIS)

EP 3 503 379 B1

FIG.4D

ARC TANGENT ARITHMETIC PROCESSING VALUE OF MR SENSOR

Zα

POSITIONING INFORMATION (COARSE)

(S20) (S25) (S30) (S35) (S40) (S45)

INITIALIZE MOTOR DRIVING SIGNALS

(−N ROTATION)    (N ROTATION)

(0 ROTATION)

PWM SIGNAL (DUTY RATI OF PWM)

ARC TANGENT ARITHMETIC PROCESSING VALUE OF MR SENSOR (EXPANSION)

POSITIONING INFORMATION (DENSE)

(S388) (S394) (S400) (S406) (S412) (S418)

(ABSOLUTE ORIGIN POSITION)

PHASE DIFFERENCE Δθ    Ph1z
(SYNCHRONOUS)

0°  60°  120°  180°  240°  300°  360°

H1    Ph1

SYNCHRONIZATION WITH HALL ELEMENT OUTPUT

H2    Ph2

H3    Ph3

EP 3 503 379 B1

FIG.5

START

ACQUIRE Z PHASE SIGNAL
(Z0, Z1, --, ZN) — S501

ACQUIRE SIGNAL OF WIDTH OF
Z PHASE — S502

ACQUIRE INCREMENTAL
A/B PHASE SIGNALS — S503

A/B PHASE SIGNALS
TO ABSOLUTE VALUE — S504

GENERATE MULTI ROTATION
ABSOLUTE SIGNAL
FROM Z PHASE SIGNAL
AND A/B PHASE SIGNALS — S505

SYNCHRONIZE Zα
AND HALL ELEMENT OUTPUT — S506

STORE DATA IN EEPROM — S507

IS IT END?    NO

YES — S508

END

FIG.6

FIG.7A

START

ACQUIRE COMMAND VALUE ~S601

ACQUIRE MULTI ROTATION ABSOLUTE SIGNALS ~S602

COMPUTES DIFFERENCE VALUE WITH COMMAND VALUE ~S603

DETERMINE SYNCHRONIZATION WITH HALL ELEMENT OUTPUT ~S604

IS THERE NO DEVIATION? — NO ~S605

YES

S607
N1≧2? — NO
YES

TRANSMITS ABNORMALITY INFORMATION OF ROTARY ENCODER TO ECU

N1=N1+1 ~S606

S608

GENERATE SPEED SIGNAL (PWM) BASED ON PID CONTROL ~S609

OUTPUT TO DC MOTOR DRIVE CONTROLLER ~S610

ACQUIRE MULTI ROTATION ABSOLUTE POSITION SIGNAL ~S611

COMPUTE DIFFERENCE DEVIATION AMOUNT ~S612

DETERMINE SYNCHRONIZATION WITH HALL ELEMENT OUTPUT ~S613

IS THERE NO DEVIATION? — NO ~S614

YES

S616
N2≧2? — NO
YES

N2=N2+1 ~S615

S617

TRANSMIT ABNORMALITY INFORMATION OF MOTOR TO ECU

TEMPORARY SERVO CONTROL BY OUTPUT OF NORMAL SENSOR

IS IT END? — NO ~S618

YES ~S619

END

EP 3 503 379 B1

41

FIG.7B

# FIG.8

EP 3 503 379 B1

FIG.9A

FIG.9B

FIG.9C

FIG.10

## FIG.11A

EXTERNAL TERMINAL EQUIPMENT — 700

CONTROLLER — 300

STATOR COIL OF MOTOR — 1210

ROTOR/MR SENSOR (MAGNET) — 120, 21

STATOR/MR SENSOR (DETECTING ELEMENT /PROCESSING CIRCUIT) — 22, 23

INITIAL SETTING/PARAMETER SETTING — 1501

THREE PHASE DRIVING SIGNAL FOR INITIAL SETTING — 1502

DRIVE POWER — 1505

TEMPORARY FIX MAGNET TO ROTARY SHAFT (ORIGIN POSITION To) — 1503

FIX MR SENSOR /PROCESSING CIRCUIT TO STATOR — 1504

ROTATE ROTARY SHAFT — 1506

OUTPUT A/B PHASE SIGNAL (INCREMENTAL SIGNAL) — 1507

GENERATE A/B SIGNALS DATA (TABLE 1) — 1508

DETECT INTEGRAL VALUE PEAK PZ OF COUNTER ELECTROMOTIVE FORCE — 1510

DETECT COUNTER ELECTROMOTIVE FORCE OF EACH PHASE — 1509

GENERATE PROVISIONAL ABSOLUTE DATA (T0 BASIS) OF EACH PHASE (TABLE 2) — 1511

(A)

EP 3 503 379 B1

FIG.11B

(A)

1512 — EXTRACT RISING PHASE SN OF EACH PHASE SIGNAL

1513 — GENERATE WIDTH OF SIGNAL OF EACH PHASE (TABLE 3)

1514 — ABSOLUTE ORIGIN POSITION (Zo) ON ROTARY SHAFT RELATED TO DRIVING SIGNAL (TABLE 4)

1515 — REQUEST FOR POSITIONING MAGNET

1516 — FIX ROTOR AND ROTATE MAGNET RELATIVE TO ROTARY SHAFT

1517 — ACQUIRED MR SENSOR OUTPUT (To) WITH ROTATION OF MAGNET

1518 — INFORMATION OF MAGNET ORIGINPOSITION (To) RELATED TO ROTARY SHAFT

1519 — DETERMINE MAGNET POSITION

1520 — SET ABSOLUTE POSITION Zo OF MAGNET RELATED TO ROTARY SHAFT

1521 — FORMALLY FIX MAGNET TO ROTARY SHAFT (ABSOLUTE POSITION Zo)

1522 — RELEASE FIXING OF ROTOR

1523 — CORRECT PROVISIONAL ABSOLUTE DATA OF EACH PHASE TO Zo BASIS AND GENERATE ABSOLUTE DATA

1524 — GENERATE MULTI ROTATION ABSOLUTE DATA OF EACH PHASE AND RECORD (FIG.11 B)

1525 — END OF INITIAL SETTING

47

FIG.12

START

TEMPORARILY FIX MAGNET OF MR SENSOR
TO ROTATOR SHAFT
AT PROVISIONAL POSITION (To) — S1610

INITIALIZE EEPROM DATA — S1611

S1615

S1612 — OUTPUT INVERTER DRIVING SIGNAL
(± N ROTATION)

CORRECT MR SENSOR OUTPUT
BASED ON DIFFERENCE BETWEEN
INVERTER DRIVING SIGNAL AND
A/B PHASE SIGNAL

S1613 — OBTAIN A/B PHASE SIGNAL (± N ROTATION)

NORMAL? — NO

S1614 — YES

CONVERT A/B-PHASE SIGNALS TO
PROVISIONAL ABSOLUTE VALUES(ADDRESSING) — S1616

DETECT INTEGRAL VALUE PEAK PZ OF
COUNTER ELECTROMOTIVE FORCE — S1617

DETECT INTEGRAL VALUE PEAK PZ OF
COUNTER ELECTROMOTIVE FORCE — S1618

EXTRACTOR RISING PHASE SN OF
EACH PHASE SIGNALS BASED ON PZ — S1619

SETS UP WIDTH OF SIGNAL OF EACH PHASE — S1620

OBTAIN ABSOLUTE ORIGIN POSITION (Zo) OF
ROTARY SHAFT RELATIVE TO DRIVING SIGNAL — S1621

SYNCHRONIZATION BETWEEN Zo AND
HALL ELEMENT OUTPUT — S1622

FIX MAGNET OF MR SENSOR TO ROTARY SHAFT
ON ABSOLUTE ORIGIN POSITION (Zo) — S1623

CORRECT RISING POSITION SN OF EACH PHASE
AT ABSOLUTE ORIGIN POSITION Zo — S1624

CONVERT ALL OF A,B,U,V,W, Z PHASE DATA
TO ABSOLUTE DATA — S1625

RECORD ALL OF
ABSOLUTE A,B,U,V,W, Z PHASE DATA IN EEPROM — S1626

END

FIG.13

MAGNETIC POLE 11U1

MAGNETIC POLE 11V1

MAGNETIC POLE 11W1

INTEGRAL VALUE OF COUNTER ELECTROMOTIVE FORCE

Sn POSITION

0°    20°    40°    60°    80°    100°    120°

120°

(Sn)

FIG.14

T0    Z1    Z2    Z3

ONE ROTATION

1/4Ap    Ap

Z

A

B

U

V

W

ROTATION ANGLE (To BASIS)

FIG.15

FIG.16A

FIG.16B

FIG.17

W PHASE

| EEPROM ADDRESS | U/V/W PHASE | ABSOLUTE ORIGIN POSITION | ROTATION SPEEDS (Z PHASE) | A PHASE/ B PHASE | ABSOLUTE (CUMULATIVE ADDITION VALUE) | PHASE OF HALL ELEMENT |
|---|---|---|---|---|---|---|
| | W-up | | 1 | A | | |

V PHASE

| EEPROM ADDRESS | U/V/W PHASE | ABSOLUTE ORIGIN POSITION | ROTATION SPEEDS (Z PHASE) | A PHASE/ B PHASE | ABSOLUTE (CUMULATIVE ADDITION VALUE) | PHASE OF HALL ELEMENT |
|---|---|---|---|---|---|---|
| | V-up | | 1 | A | | |

U PHASE

| EEPROM ADDRESS | U/V/W PHASE | ABSOLUTE ORIGIN POSITION | ROTATION SPEEDS (Z PHASE) | A PHASE/ B PHASE | ABSOLUTE (CUMULATIVE ADDITION VALUE) | PHASE OF HALL ELEMENT |
|---|---|---|---|---|---|---|
| 0004505 | U-up | $Z_0$ | 1 | A | 0000001 | |
| 0004506 | U | | 1 | B | 0000001 | |
| 0004507 | U | | 1 | A | 0000002 | $Ph_{1Z}$ |
| 0004508 | U | | 1 | B | 0000002 | |

EP 3 503 379 B1

FIG.18

```
                    ┌─────────────────────┐
                    │        START        │
                    └──────────┬──────────┘
                               ▼
            ┌──────────────────────────────┐
            │   GENERATE U, V, W SIGNALS    │──S1801
            └───────────────┬──────────────┘
                            ▼
            ┌──────────────────────────────┐
            │   ACQUIRE PULSE NUMBER OF     │──S1802
            │ U, V, W PHASE (PULSES/ROTATION)│
            └───────────────┬──────────────┘
                            ▼
            ┌──────────────────────────────┐
            │   ACQUIRE WIDTH OF Z PHASE    │──S1803
            └───────────────┬──────────────┘
                            ▼
            ┌──────────────────────────────┐
            │   ACQUIRE Z PHASE SIGNAL      │──S1804
            │   (Z1, Z2, -, -, ZN)          │
            └───────────────┬──────────────┘
                            ▼
            ┌──────────────────────────────┐
            │  SYNCHRONIZE RISING OF U PHASE│──S1805
            │  WITH Zo                      │
            └───────────────┬──────────────┘
                            ▼
            ┌──────────────────────────────┐
            │   ACQUIRE INCREMENTAL         │──S1806
            │   A/B PHASE SIGNALS           │
            └───────────────┬──────────────┘
                            ▼
            ┌──────────────────────────────┐
            │  ABSOLUTE A, B, Z, U, V, W SIGNALS│──S1807
            └───────────────┬──────────────┘
                            ▼
            ┌──────────────────────────────┐
            │ GENERATE MULTI ROTATION ABSOLUTE SIGNALS│──S1808
            │ FROM Z PHASE SIGNAL AND A/B PHASE SIGNALS│
            └───────────────┬──────────────┘
                            ▼
            ┌──────────────────────────────┐
            │  SYNCHRONIZATION BETWEEN Zo   │──S1809
            │  AND HALL ELEMENT OUTPUT      │
            └───────────────┬──────────────┘
                            ▼
            ┌──────────────────────────────┐
            │    STORE DATA IN EEPROM       │──S1810
            └───────────────┬──────────────┘
                            ▼
                    ╱───────────────╲      NO
                   ◁    IS IT END?    ▷──────────
                    ╲───────────────╱
                            │ YES       ──S1811
                            ▼
                    ┌─────────────────────┐
                    │         END         │
                    └─────────────────────┘
```

FIG.19

START

ACQUIRE COMMAND VALUE — S1901

ACQUIRE MULTI ROTATION ABSOLUTE SIGNALS — S1902

COMPUTES DIFFERENCE VALUE WITH COMMAND VALUE — S1903

DETERMINE SYNCHRONIZATION WITH HALL ELEMENT OUTPUT — S1904

IS THERE NO DEVIATION? — S1905

S1907 — N1≧2?

NO

S1906 — N1=N1+1

S1908 — TRANSMITS ABNORMALITY INFORMATION OF ROTARY ENCODER TO ECU

YES

SPEED SIGNAL BASED ON PID CONTROL — S1909

OUTPUT TO INVERTER DRIVE CONTROLLER — S1910

ACQUIRE MULTI ROTATION ABSOLUTE SIGNAL — S1911

COMPUTE DIFFERENCE DEVIATION AMOUNT — S1912

DETERMINE SYNCHRONIZATION WITH HALL ELEMENT OUTPUT — S1913

IS THERE NO DEVIATION? — S1914

S1916 — N2≧2?

NO

S1915 — N2=N2+1

S1917 — TRANSMIT ABNORMALITY INFORMATION OF MOTOR TO ECU

YES

TEMPORARY SERVO CONTROL BY OUTPUT OF NORMAL SENSOR — S1918

IS IT END? — S1919

NO

YES

END

EP 3 503 379 B1

53

FIG.20

EP 3 503 379 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015149800 A
- US 2012249127 A1
- US 2016161289 A1
- EP 1505371 A1